(19) Europäisches Patentamt
European Patent Office
Office européen des brevets

(11) **EP 4 371 687 A1**

(12) **EUROPEAN PATENT APPLICATION**
published in accordance with Art. 153(4) EPC

(43) Date of publication:
**22.05.2024 Bulletin 2024/21**

(21) Application number: **22880793.9**

(22) Date of filing: **29.09.2022**

(51) International Patent Classification (IPC):
**B23K 11/16** (2006.01)    **B23K 11/11** (2006.01)
**B23K 11/24** (2006.01)    **C21D 9/50** (2006.01)
**C22C 38/00** (2006.01)    **C22C 38/58** (2006.01)

(52) Cooperative Patent Classification (CPC):
**B23K 11/11; B23K 11/16; B23K 11/24; C21D 9/50;
C22C 38/00; C22C 38/58**

(86) International application number:
**PCT/JP2022/036459**

(87) International publication number:
**WO 2023/063097 (20.04.2023 Gazette 2023/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.10.2021 JP 2021167371**

(71) Applicant: **JFE Steel Corporation
Tokyo 100-0011 (JP)**

(72) Inventors:
• **ENDO, Reiko
Tokyo 100-0011 (JP)**
• **TAKASHIMA, Katsutoshi
Tokyo 100-0011 (JP)**
• **MATSUDA, Hiroshi
Tokyo 100-0011 (JP)**

(74) Representative: **Haseltine Lake Kempner LLP
Bürkleinstrasse 10
80538 München (DE)**

(54) **RESISTANCE SPOT WELDING JOINT AND RESISTANCE SPOT WELDING METHOD FOR SAME**

(57)    It is an object to provide a resistance spot welded joint and a resistance spot welding method therefor. The present invention is a resistance spot welded joint formed by resistance-spot-welding a plurality of steel sheets including at least one high strength steel sheet. The high strength steel sheet has a specific chemical composition, and the microstructure of a nugget edge region includes ferrite at an area fraction of 1% or more with respect to the total area of the nugget edge region. The hardness $Hv$ of a softest portion of the nugget edge region and the hardness $Hvm$ of a central portion of the nugget satisfy the relation $0.90 \times Hvm > Hv$, and the hardness $Hvh$ of a HAZ softened region and the hardness $Hvm$ of the central portion of the nugget satisfy the relation $0.90 \times Hvm > Hvh$.

FIG. 1

**Description**

Technical Field

The present invention relates to a resistance spot welded joint and a resistance spot welding method therefor.

Background Art

In recent years, various high strength steel sheets (high tensile strength steel sheets) are being increasingly used for automobile bodies, from the viewpoint of achieving a weight reduction to thereby improve fuel efficiency and from the viewpoint of achieving crash safety. In automobile assembly lines, resistance spot welding is mainly used to join components.

The joint strength of a resistance spot weld joined by resistance spot welding is evaluated using tensile shear strength (TSS) that is the tensile strength of the joint in a shear direction and cross tension strength (CTS) that is the tensile strength in a peeling direction. Although the TSS of a resistance spot weld tends to increase as the tensile strength of the base material increases, in some cases, the CTS decreases when the tensile strength of the base material is 780 MPa or more. As the CTS of a resistance spot weld (weld) decreases, the mode of failure of the weld changes from plug failure in which ductile fracture occurs in the heat-affected zone (HAZ) or the base material around the resistance spot weld to partial plug failure or interface failure in which brittle fracture occurs in the nugget. The cause of the reduction in the CTS may be, for example, brittle fracture that occurs due to hardening of an edge portion of the nugget by quenching. To solve the above problem, various studies have been conducted on a secondary energization method in which energization is performed again after primary energization.

In a resistance spot weld using steel sheets having a tensile strength of 780 MPa or more (high strength steel sheets), thermal shrinkage in a cooling process during welding causes tensile residual stress in martensite that is a hard microstructure. Moreover, when hydrogen is introduced into a weld metal from oil, water, or a coated layer on the surface of a steel sheet during welding, the hydrogen may enter the resistance spot weld. In this case, it is feared that delayed fracture will occur. Therefore, to solve the problem of delayed fracture in addition to the CTS problem described above, studies have been conducted on energization patterns and steel sheet microstructures.

Examples of the technique for solving these problems include those disclosed in Patent Literature 1 to Patent Literature 5. Patent Literature 1 discloses that a melted and solidified portion (nugget) in a joint portion and the heat-affected zone that are formed when resistance welding steel sheets having a specific chemical composition are resistance-welded have a microstructure including tempered martensite or tempered bainite as a main phase.

Patent Literature 2 discloses a welded joint obtained through a secondary energization step at a temperature equal to or lower than the $Ac_1$ temperature. The spot weld in this welded joint has a tempered martensite region formed between a central portion of the nugget and a softest portion of the heat-affected zone whose hardness is lowest.

Patent Literature 3 discloses a resistance spot welded joint in which the hardness outside the nugget and the microstructure inside the nugget are specified. The conditions for the resistance spot weld in this resistance spot welded joint are that the microstructure of the nugget is an equiaxed martensite microstructure and that a soft region whose hardness is lower than the height of the base material is present outside the nugget.

Patent Literature 4 discloses a spot welding method including three separate steps including a first energization step of forming a nugget, a cooling step in which the energization is suspended, and a second energization step of softening the nugget. In the second energization step, martensite formed in the first energization step is tempered to form tempered martensite. The nugget is thereby softened, and the inside of the nugget is tempered.

Patent Literature 5 discloses a resistance spot welding method in which a primary energization step and a secondary energization are combined to reduce the amount of hydrogen introduced into the weld metal and to prevent the shrinkage of the nugget caused by splashes generated.

Citation List

Patent Literature

PTL 1: Japanese Patent No. 5182855
PTL 2: Japanese Patent No. 5713147
PTL 3: Japanese Patent No. 5895430
PTL 4: Japanese Patent No. 6107939
PTL 5: Japanese Patent No. 6315161

Summary of Invention

Technical Problem

However, Patent Literature 1 discloses only the chemical composition of the resistance welded steel sheets and the microstructure of the joint portion, and no consideration is given to welding conditions in the secondary energization method in which energization is again performed after the primary energization, specifically to the temperature range in the secondary energization.

When steel sheets (i.e., high strength steel sheets) having a chemical composition in the present invention described later are welded, it is necessary that, after the formation of a nugget, the weld be heated to a temperature just above the $Ac_1$ temperature to transform the martensite in the edge portion of the nugget to a duplex microstructure including ferrite and martensite after welding. If this temperature is excessively low, the duplex microstructure is not obtained, and two effects, i.e., relaxation of stress concentration in the edge portion of the nugget and improvement in the toughness in the edge portion of the nugget, cannot be obtained. Therefore, since cracks propagate into the nugget, the CTS decreases. If the above temperature is higher than the $Ac_3$ temperature, the edge portion of the nugget is a martensite single phase microstructure. Therefore, the microstructure may be a fragile microstructure. For the reasons described above, an object of the present invention is to provide a technique for achieving microstructure control in which the weld is tempered at an appropriate temperature. Specifically, the technical idea of the invention differs from that of Patent Literature 1.

In Patent Literature 2, a region formed of tempered martensite is present between the central portion of the nugget and the softest portion of the heat-affected zone whose hardness is lowest. However, since the energization in the secondary energization step is single stage energization, the energization causes the temperature to increase, and the temperature cannot be maintained constant. In this case, the HAZ cannot be tempered sufficiently. Even when the technique in Patent Literature 2 is applied to steel sheets having the chemical composition in the present invention, it is unclear whether the improvement in CTS and the improvement in delayed fracture resistance can be achieved simultaneously.

In the present invention, the above-described region formed of tempered martensite in Patent Literature 2 is not formed. In the present invention, the edge portion of the nugget is heated to a temperature just above the $Ac_1$ temperature, and the edge portion of the nugget thereby has the above-described duplex microstructure including ferrite. Therefore, with this technique, the effect of relaxing stress concentration in the edge portion of the nugget and the effect of improving the toughness in the edge portion of the nugget can be obtained. Specifically, the technical idea of the present invention differs from that of Patent Literature 2.

With the technique of Patent Literature 3, the microstructure inside the nugget is the equiaxed martensite microstructure, and the soft region whose hardness is lower than that of the base material is present outside the nugget, so that deformation is concentrated in the soft region outside the nugget. However, with the technique of the present invention, the edge portion of the nugget has the above-described duplex microstructure including ferrite, and this allows the effect of relaxing stress concentration in the edge portion of the nugget and the effect of improving the toughness in the edge portion of the nugget to be obtained. Specifically, in Patent Literature 3, no consideration is given to the microstructure control in the invention in which the weld is tempered in an appropriate temperature range.

With the technique of Patent Literature 4, martensite formed in the first energization step is tempered in the second energization step to form tempered martensite. However, with the technique of the present invention, the edge portion of the nugget has the above-described duplex microstructure including ferrite, and the microstructure inside the nugget obtained in the invention is not tempered and is a hardened microstructure. Specifically, the technical idea of the present invention differs from that of Patent Literature 4.

The welding method in Patent Literature 5 does not include a cooling step in the energization step except for a holding time. Therefore, unlike the present invention, the edge portion of the nugget cannot have the above-described duplex microstructure including ferrite. With the technique of the invention, the microstructure of the edge portion of the nugget includes ferrite, and the HAZ has a microstructure including tempered martensite, so that the amount of hydrogen entering the steel is reduced. Specifically, the technical idea of the present invention differs from that of Patent Literature 5.

As described above, the spot welding method in which high strength steel sheets having a tensile strength of 780 MPa or more and containing C in an amount of 0.05 to 0.6% by mass are welded only by single energization has the problem of reduction in CTS and the problem of delayed fracture, and there is a need for further improvement.

The present invention has been made in view of the foregoing problems, and it is an object to provide a resistance spot welded joint having improved joint strength and improved delayed fracture resistance and formed by resistance-spot-welding a plurality of steel sheets including at least one high strength steel sheet and to provide a resistance spot welding method therefor.

Solution to Problem

In the present invention, to solve the foregoing problems, extensive studies have been conducted on the mechanism of the reduction in cross tension strength (CTS) in resistance spot welding using a sheet set including at least one high strength steel sheet and on a method for improving the cross tension strength (CTS).

As described above, as the strength of steel sheets increases, the CTS decreases. When the CTS is low, the failure mode changes from plug failure in which ductile fracture occurs in the heat-affected zone (HAZ) or the base material around the resistance spot weld to interface failure or partial plug failure in which brittle fracture occurs in the nugget. It is therefore difficult to ensure sufficient CTS in the high strength steel sheets.

The causes of the interface failure include (i) embrittlement of the edge portion of the nugget due to a hard microstructure formed by rapid cooling after the formation of the nugget and (ii) cracking in the edge portion of the nugget due to stress concentration in the hardened edge portion of the nugget and the HAZ. To prevent the brittle fracture, the weld is tempered to increase the toughness of the microstructure of the edge portion of the nugget and to disperse cracking stress generated due to sheet separation in the microstructure of the tempered HAZ. To prevent cracks from propagating into the nugget, it is necessary to disperse the stress as described above to prevent the stress from being concentrated in the edge portion of the nugget.

Accordingly, in the present invention, additional studies have been conducted in order to improve the CTS of the resistance spot weld using the high strength steel sheets described above, and the following findings have been obtained.

To improve the CTS, it is necessary to improve the toughness of the edge portion of the nugget. One effective way to improve the toughness is to form a microstructure including ferrite in the edge portion of the nugget. It has been found that temperature control during welding is an effective method for forming such a microstructure. By controlling the temperature such that the microstructure of the edge portion of the nugget becomes the microstructure including ferrite, the region inside the HAZ in the vicinity of the edge portion of the nugget is most tempered, and stress concentration in the edge portion of the nugget can be avoided. It has been found that cracks thereby do not propagate into the nugget.

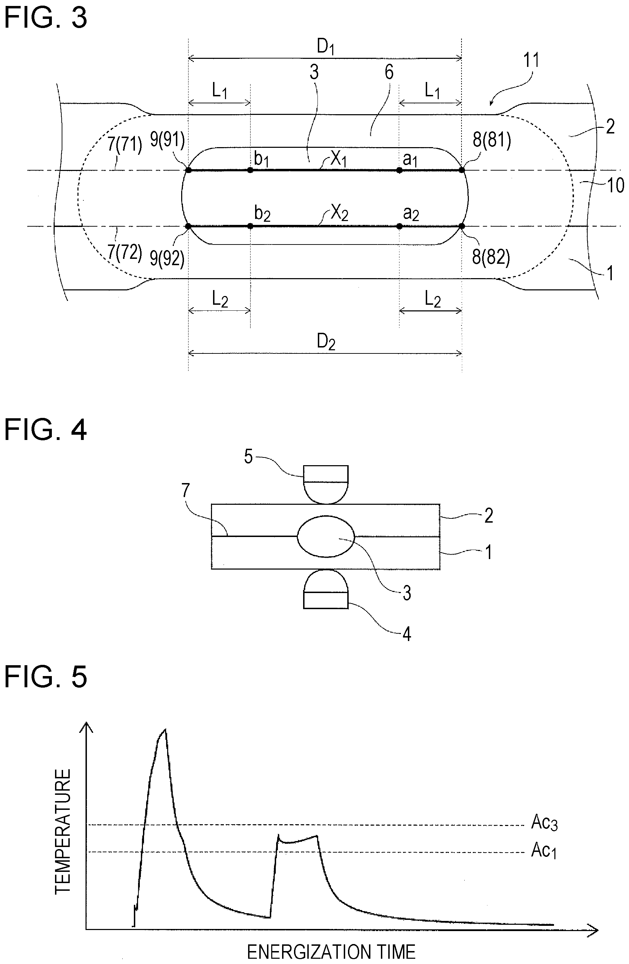

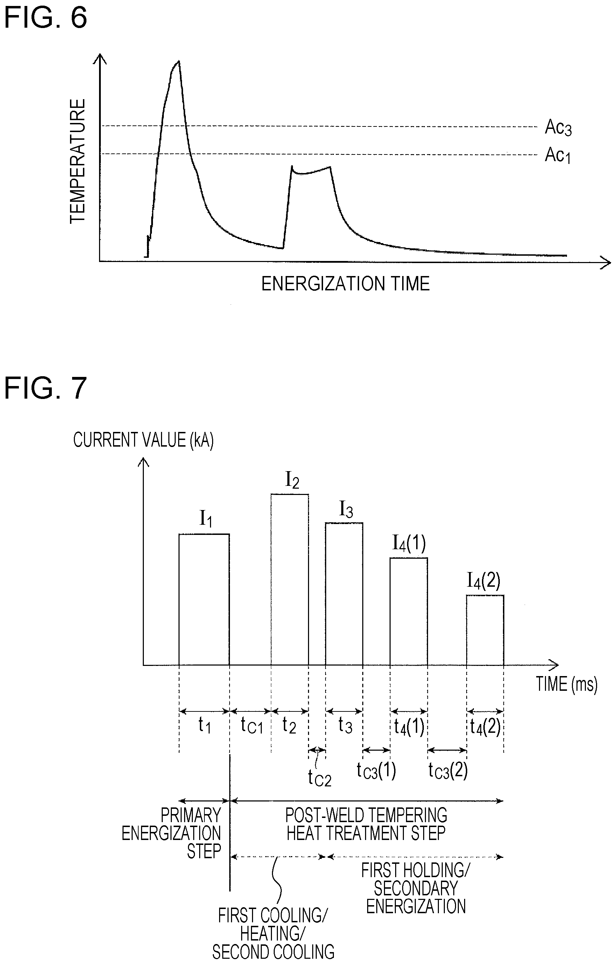

In the present invention, as for the temperature control during welding, particular attention is given to energization conditions after the primary energization step. Specifically, welding was performed under various energization conditions. Then temperature control was performed such that a temperature history shown in Fig. 5 was achieved in the edge portion of the nugget during energization and that a temperature history shown in Fig. 6 was achieved in the HAZ during energization. In this case, the above-described operational effects were obtained, and the weld formed was found to have the intended characteristics of the invention.

Specifically, first, two or more overlapping steel sheets are subjected to primary energization in which the steel sheets are heated to a temperature equal to or higher than the melting point in order to form a nugget. Then rapid cooling is performed to a temperature at which austenite transforms to martensite while the melted portion (nugget) is allowed to solidify. Then tempering is performed in an appropriate temperature range so that the edge portion of the nugget has a microstructure including ferrite (the duplex microstructure described above). This temperature control also allows a region inside the HAZ in the vicinity of the edge portion of the nugget to be tempered. It has been found that, through the procedure described above, the effect of relaxing stress concentration in the edge portion of the nugget and the effect of improving the toughness of the edge portion of the nugget are obtained and that the CTS and the delayed fracture resistance are improved.

Moreover, since the HAZ has a microstructure including tempered martensite, the effect of reducing the amount of hydrogen introduced into the steel is obtained, and the delayed fracture resistance is also improved. It has also been found that stress concentration in the edge portion of the nugget can be relaxed.

The present invention is based on the above findings and summarized as follows.

[1] A resistance spot welded joint having a resistance spot weld formed by resistance-spot-welding two or more steel sheets including at least one high strength steel sheet,

wherein the high strength steel sheet has a chemical composition containing, in mass %,

C: 0.05 to 0.6%,
Si: 0.1 to 2.0%,
Mn: 1.5 to 4.0%,
P: 0.10% or less,
S: 0.005% or less, and
N: 0.001 to 0.010%,

with the balance being Fe and incidental impurities,

wherein two points at which a boundary of a nugget intersects a faying surface between two of the two or more steel sheets are defined as a first edge and a second edge, wherein a length of a line segment X connecting the first edge and the second edge is denoted as D (mm), wherein positions on the line segment X that are spaced toward a center of the nugget from the first edge and the second edge are denoted as a point a and a point b, respectively,

wherein a region inside the nugget in which a distance L (mm) from the first edge to the point a and a distance L (mm) from the second edge to the point b satisfy a relation with the length D (mm) of the line segment X that is represented by formula (1) is defined as a nugget edge region,

wherein a microstructure of the nugget edge region on at least the faying surface includes ferrite at an area fraction of 1% or more with respect to a total area of the nugget edge region,

wherein a hardness Hv of a softest portion of the nugget edge region and a hardness Hvm of a central portion of the nugget satisfy a relation of formula (2),

wherein an intersection of a straight line Z parallel to the faying surface and the boundary of the nugget is denoted as a point q, wherein a position on the straight line Z within a heat-affected zone is denoted as a point r, wherein a region inside the heat-affected zone in which a distance M (mm) between the straight line Z and the faying surface in a thickness direction satisfies a relation of formula (3) and in which a distance T (mm) from the point q to the point r satisfies a relation of formula (4) is defined as a HAZ softened region, and

wherein a hardness Hvh of the HAZ softened region on a high strength steel sheet side and the hardness Hvm of the central portion of the nugget satisfy a relation of formula (5),

$$0 < L \leq 0.15 \times D, \qquad (1)$$

$$0.90 \times Hvm > Hv, \qquad (2)$$

$$M = 0.10 \times D, \qquad (3)$$

$$0 < T \leq 0.10 \times D, \text{ and} \qquad (4)$$

$$0.90 \times Hvm > Hvh, \qquad (5)$$

provided that, when a gap is present between the two of the two or more steel sheets at the faying surface, the first edge and the second edge are two points at which the boundary of the nugget intersects a straight line Y that is located midway in the gap and that is parallel to the faying surface.

[2] The resistance spot welded joint according to [1], wherein an average number density of carbide particles having a diameter of 100 nm or more in the HAZ softened region is 10 or more per 5 $\mu m^2$ in a cross section of the steel sheets.

[3] The resistance spot welded joint according to [1] or [2], wherein a microstructure of the HAZ softened region includes tempered martensite at an area fraction of 50% or more with respect to a total area of the HAZ softened region.

[4] The resistance spot welded joint according to any one of [1] to [3], wherein the chemical composition of the high strength steel sheet further contains, in mass %, one or two or more selected from

Al: 2.0% or less,
B: 0.005% or less,
Ca: 0.005% or less,
Cr: 1.0% or less,
Cu: 1.0% or less,
Ni: 1.0% or less,
Mo: 1.0% or less,
Ti: 0.20% or less,
V: 0.50% or less,
Nb: 0.20% or less, and
O: 0.03% or less.

[5] A resistance spot welding method for the resistance spot welded joint according to any one of [1] to [4], the resistance spot weld being formed by holding, between a pair of welding electrodes, a sheet set including the two or more steel sheets overlapping each other and including the at least one high strength steel sheet and then energizing the sheet set under application of pressure,

wherein the energizing includes a primary energization step and a post-weld tempering heat treatment step, wherein, in the primary energization step, the sheet set is energized at a current value $I_1$ (kA) to form the nugget, wherein the post-weld tempering heat treatment step includes the following processes performed in the following order:

a first cooling process in which a non-energization state is maintained for a cooling time $t_{c1}$ (ms) shown in formula (6);
a heating process in which the resistance spot weld is energized at a current value $I_2$ (kA) shown in formula (7) for an energization time $t_2$ (ms) shown in formula (8); and
a second cooling process in which a non-energization state is maintained for a cooling time $t_{c2}$ (ms) shown in formula (9),

$$800 \leq t_{c1}, \qquad (6)$$

$$I_1 < I_2 \leq 1.8 \times I_1, \qquad (7)$$

$$100 < t_2 \leq 300, \qquad (8)$$

$$0 < t_{c2} < 300. \qquad (9)$$

[6] The resistance spot welding method for the resistance spot welded joint according to [5], wherein, after the second cooling process, a first holding process is performed in which the resistance spot weld is energized at a current value $I_3$ (kA) shown in formula (10) for an energization time $t_3$ (ms) shown in formula (11),

$$0 < I_3 < I_2, \qquad (10)$$

$$0 < t_3 < 2000. \qquad (11)$$

[7] The resistance spot welding method for the resistance spot welded joint according to [6], wherein the post-weld tempering heat treatment step further includes, after the first holding process, a secondary energization process, and wherein the secondary energization process includes the following processes performed in the following order:

a third cooling process in which a non-energization state is maintained for a cooling time $t_{c3}$ (ms) shown in formula (12); and
a second holding process in which the resistance spot weld is energized for an energization time $t_4$ of longer than 0 ms and 2000 ms or shorter at a current value $I_4$ equal to or more than 0.1 times and equal to or less than 1.3 times the current value in a process including last energization,

$$t_{c3} < 300. \qquad (12)$$

[8] The resistance spot welding method for the resistance spot welded joint according to [7], wherein the third cooling process and the second holding process in the secondary energization process are repeatedly performed. Advantageous Effects of Invention

The present invention can provide a resistance spot welded joint in which stress concentration in the edge portion of the nugget is relaxed and in which the toughness of the edge portion of the nugget is improved and can also provide a resistance spot welding method for the resistance spot welded joint. Therefore, the joint strength and delayed fracture resistance of the resistance spot welded joint can be improved, so that industrially significant effects can be obtained.

Brief Description of Drawings

[Fig. 1] Fig. 1 is a cross-sectional view schematically showing the vicinity of a resistance spot weld of a resistance spot welded joint according to an embodiment of the invention.
[Fig. 2] Fig. 2 is a cross-sectional view schematically showing the vicinity of a resistance spot weld of a resistance spot welded joint according to another embodiment of the invention.
[Fig. 3] Fig. 3 is a cross-sectional view schematically showing the vicinity of a resistance spot weld of a resistance spot welded joint according to another embodiment of the invention.
[Fig. 4] Fig. 4 is a cross-sectional view illustrating an example of the resistance spot welding method of the invention.
[Fig. 5] Fig. 5 is a graph showing the relation between energization time and temperature in an edge portion of a nugget in a post-weld tempering heat treatment step in the invention.
[Fig. 6] Fig. 6 is a graph showing the relation between energization time and temperature in a HAZ in the post-weld tempering heat treatment step in the invention.
[Fig. 7] Fig. 7 is a graph illustrating an example of an energization pattern in the resistance spot welding method of the invention.

Description of Embodiments

The present invention will next be described. However, the present invention is not limited to the following embodiments.

[Resistance spot welded joint]

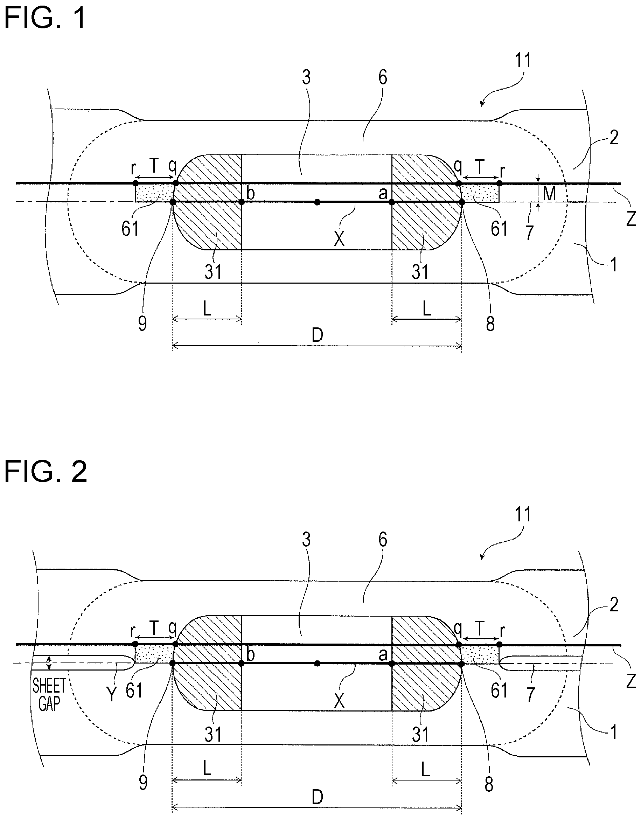

Referring first to Figs. 1 to 3, the resistance spot welded joint of the invention will be described. Figs. 1 to 3 show cross-sectional views illustrating examples of a resistance spot weld in the resistance spot welded joint of the invention and the vicinity thereof, the cross-sectional views being taken in the thickness direction. In Fig. 1, the number of overlapping steel sheets is two. In Fig. 2, the number of overlapping steel sheets is two, and a sheet gap is present between the steel sheets. In Fig. 3, the number of overlapping steel sheets is three.

The present invention is a resistance spot welded joint formed by resistance-spot-welding a plurality of overlapping steel sheets. The overlapping steel sheets include at least one high strength steel sheet described later. No particular limitation is imposed on the number of steel sheets described above, and it is only necessary that the number of steel sheets be two or more. The upper limit of the number of steel sheets is not particularly specified, but the number of steel sheets is preferably 4 or less.

Fig. 1 shows a resistance spot welded joint 11 formed by welding two overlapping steel sheets, and a high strength steel sheet is used for a steel sheet 1 disposed on the lower side and/or a steel sheet 2 disposed on the upper side. In the example shown in Fig. 1, the high strength steel sheet is used for the upper steel sheet 2. The high strength steel sheet may have a coated layer as described later. However, in Fig. 1, the illustration of the coated layer on the surface of the steel sheet is omitted. A resistance spot weld described below is formed on a steel sheet faying surface (faying surface) 7 between the steel sheets 1 and 2.

[Resistance spot weld]

The resistance spot weld in the resistance spot welded joint 11 of the invention will be described in detail. As shown in Fig. 1, the resistance spot weld (hereinafter referred to as the "weld") of the resistance spot welded joint 11 includes a nugget 3 and a heat-affected zone (HAZ) 6. In the present invention, the microstructure of an edge portion of the nugget and the microstructure of a region inside the HAZ in the vicinity of the edge portion of the nugget are specified as follow.

As shown in Fig. 1, two points at which the boundary of the nugget 3 intersects the faying surface 7 between the steel sheets 1 and 2 are defined as a first edge 8 and a second edge 9. The length of a line segment X connecting the first edge 8 to the second edge 9 is denoted as D (mm). Positions on the line segment X that are spaced toward the center of the nugget 3 from the first edge 8 and the second edge 9 are denoted as a point a and a point b, respectively, and the distance between the first edge 8 and the point a and the distance between the second edge 9 and the point b are each denoted as L (mm). In the present invention, a region inside the nugget 3 in which the distances L satisfies the relation with the length D of the line segment X that is represented by formula (1) (the regions diagonally shaded in Fig. 1) is defined as a "nugget edge region 31."

The microstructure of the nugget edge region 31 on at least the faying surface 7 includes ferrite at an area fraction of 1% or more with respect to the total area of the nugget edge region 31, and the hardness Hv of a softest portion of the nugget edge region 31 and the hardness Hvm of the central portion of the nugget satisfy the relation of formula (2).

$$0 < L \leq 0.15 \times D \qquad (1)$$

$$0.90 \times Hvm > Hv \qquad (2)$$

D in formula (1) represents the length of the line segment X. Hv in formula (2) represents the hardness of the softest portion of the nugget edge region 31, and Hvm represents the hardness of the central portion of the nugget.

In the present invention, the microstructure of the HAZ 6 is also controlled. The microstructure of the HAZ 6 in the present invention is formed on a high strength steel sheet side described later at both edges of the nugget 3.

As shown in Fig. 1, the intersection of a straight line Z parallel to the faying surface 7 and the boundary of the nugget 3 is denoted as a point q, and a position on the straight line Z within the HAZ 6 is denoted as a point r. A region inside the HAZ 6 in which the distance M (mm) between the straight line Z and the faying surface 7 in the thickness direction satisfies the relation of formula (3) and in which the distance T (mm) from the point q to the point r satisfies the relation of formula (4) is defined as a HAZ softened region 61. The "straight line Z" is a line drawn on the high strength steel sheet side in the invention.

The hardness Hvh of the HAZ softened region 61 on the high strength steel sheet side in the invention and the hardness Hvm of the central portion of the nugget 3 satisfy the relation of formula (5).

$$M = 0.10 \times D \qquad (3)$$

$$0 < T \leq 0.10 \times D \qquad (4)$$

$$0.90 \times Hvm > Hvh \qquad (5)$$

D in formulas (3) and (4) represents the length of the line segment X. Hvm in formula (5) represents the hardness of the central portion of the nugget, and Hvh represents the hardness of the HAZ softened region.

When three or more steel sheets 1, 2, and 10 are disposed so as to overlap each other as shown in Fig. 3, nugget edge regions 31 (not shown in Fig. 3) are present for respective faying surfaces 71 and 72. When a gap is present between the steel sheets 1 and 2 at the faying surface 7 as shown in Fig. 2, two points at which the boundary of the nugget 3 intersects a straight line Y located midway in the gap and parallel to the faying surface 7 are defined as the first edge 8 and the second edge 9.

[Area fraction of ferrite in nugget edge region: 1% or more]

If the area fraction of ferrite in the nugget edge region 31 with respect to the total area of the nugget edge region 31 is less than 1%, the temperature during welding is not controlled appropriately. If the temperature is not controlled appropriately as described above, martensite in the edge portion of the nugget is not transformed to a duplex microstructure including ferrite and martensite after welding, and the toughness of the edge portion of the nugget cannot be improved. Moreover, it is highly possible that the microstructure of the HAZ in the vicinity of the edge portion of the nugget is martensite, and therefore the hardness Hvh of the HAZ softened region 61 does not meet the hardness described above.

Specifically, from the viewpoint of judging whether the edge portion of the nugget is heated to an appropriate temperature (a temperature just above the $Ac_1$ temperature) such that the edge portion of the nugget has the duplex microstructure described above and that the microstructure of the HAZ in the vicinity of the edge portion of the nugget is tempered martensite, the area fraction of ferrite in the nugget edge region 31 is set to 1% or more. The area fraction of ferrite is preferably 3% or more, more preferably 5% or more, still more preferably 7% or more, and yet more preferably 20% or more.

Generally, when the secondary energization is not performed after the primary energization step for forming the nugget, ferrite is present near the boundary with the base material. However, in the present invention, the temperature during welding is controlled so that the microstructure of the edge portion of the nugget becomes the duplex microstructure including ferrite and martensite, as described above. In this case, the HAZ softened region 61 is formed in the vicinity of the edge portion of the nugget, indicating that the HAZ is locally tempered. Since the nugget edge region 31 includes ferrite in the duplex microstructure, its brittleness is lower than that when the nugget edge region 31 is full martensite, so that cracks are unlikely to propagate into the nugget. Therefore, the toughness of the edge portion of the nugget can be improved.

In the present invention, no particular limitation is imposed on the upper limit of the area fraction of ferrite in the nugget edge region 31. From the viewpoint of controlling the heating temperature of the edge portion of the nugget to a temperature just above the $Ac_1$ temperature, the area fraction of ferrite in the nugget edge region 31 is preferably 80% or less, more preferably 60% or less, still more preferably 50% or less, and yet more preferably 35% or less.

The microstructure (remaining microstructure) of the nugget edge region 31 other than ferrite is martensite. For the reason that the heating temperature of the edge portion of the nugget is controlled to a temperature just above the $Ac_1$ temperature as described above, the area fraction of martensite in the nugget edge region 31 with respect to the total area of the nugget edge region 31 is preferably 97% or less. The area fraction of martensite is more preferably 95% or less, still more preferably 80% or less, yet more preferably 70% or less, and even more preferably 40% or less. The area fraction of martensite is preferably 20% or more and more preferably 30% or more.

As described above, in the present invention, it is important that the nugget edge region 31 have the duplex microstructure including ferrite and martensite. In particular, by controlling the area fraction of ferrite in the duplex microstructure within the above-described range, the operational effects described above can be obtained. Since the nugget edge region 31 has the duplex microstructure, cracks are prevented from propagating into the nugget. Therefore, stress concentration in the nugget edge region 31 can be avoided, and the nugget edge region 31 has toughness. In this case, even when a crack is formed due to sheet separation under a CTS load, the crack does not propagate into the nugget 3.

The duplex microstructure is obtained by controlling the temperature in a post-weld tempering heat treatment step described later.

In the present invention, the microstructure of the nugget 3 and the microstructure of the nugget edge region 31 can be measured by a method described later in Examples.

[Hardness of nugget edge region]

The hardness Hv of the softest portion of the nugget edge region 31 and the hardness Hvm of the central portion of the nugget 3 satisfy the relation of formula (2).

$$0.90 \times \text{Hvm} > \text{Hv} \qquad (2)$$

The microstructure of the nugget 3 except for the nugget edge region 31 is martensite.

The "hardness Hv of the softest portion of the nugget edge region 31" is the smallest Vickers hardness value in the nugget edge region 31 that is measured according to JIS Z 2244 (2020). Specifically, a measurement method described later in Examples is used. A cross-sectional microstructure of the nugget is used as a test specimen, and a line connecting two intersections (first and second edges) of the boundary of the elliptical melted portion (nugget) and a line extending along the faying surface between the steel sheets is defined as a line segment X. The hardness is measured along the line segment X from these two intersections toward the inner side of the melted portion at intervals of 0.2 (mm). The minimum value of the measurement values in the nugget edge region 31 is used as the "hardness Hv of the softest portion of the nugget edge region 31."

The "hardness Hvm of the central portion of the nugget 3" is the Vickers hardness value measured in the central portion of the nugget 3 according to JIS Z 2244 (2020). Specifically, the measurement method described later in Examples is used. A cross-sectional microstructure of the nugget is used as a test specimen, and a line connecting two intersections (first and second edges) of the boundary of the elliptical melted portion (nugget) and a line extending along the faying surface between the steel sheets is defined as a line segment X. The hardness of the midpoint between these two intersections on the line segment X is measured. The measured value is used as the "hardness Hvm of the central portion of the nugget."

If the hardness Hv of the softest portion of the nugget edge region 31 and the hardness Hvm of the central portion of the nugget 3 do not satisfy the relation of formula (2), the nugget edge region 31 is a martensite single phase microstructure, and the above-described duplex microstructure cannot be obtained. In this case, the improvement of the toughness of the nugget edge region 31 and the relaxation of stress concentration in the nugget edge region 31 cannot be achieved. The hardness Hv of the softest portion of the nugget edge region 31 is equal to or less than 0.85 times the hardness Hvm of the central portion of the nugget 3.

In the present invention, no particular limitation is imposed on the lower limit of the hardness Hv of the softest portion of the nugget edge region 31. From the viewpoint of controlling the ratio in the duplex region including ferrite and martensite in the nugget edge region 31 within the above-described range, the hardness Hv of the softest portion of the nugget edge region 31 is preferably equal to or more than 0.40 times the hardness Hvm of the central portion of the nugget 3, more preferably equal to or more than 0.50 times the hardness Hvm of the central portion of the nugget 3, and still more preferably equal to or more than 0.60 times the hardness Hvm of the central portion of the nugget 3.

[Hardness of HAZ softened region]

The hardness Hvh of the HAZ softened region 61 on the high strength steel sheet side in the invention and the hardness Hvm of the central portion of the nugget 3 satisfy the relation of formula (5).

$$0.90 \times Hvm > Hvh \qquad (5)$$

As described above, by controlling the heating temperature of the edge portion of the nugget, the microstructure of the edge portion of the nugget becomes the duplex microstructure including ferrite. By controlling the microstructure of the nugget edge region 31 appropriately, the microstructure of the HAZ 6 is also controlled.

The "hardness Hvh of the HAZ softened region 61" is the average of Vickers hardness values measured in the HAZ softened region 61 according to JIS Z 2244 (2020). Specifically, a measurement method described later in Examples is used. The measurement is performed in the HAZ softened region 61 at intervals of 0.2 (mm) under the condition that an indenter load of 300 gf is maintained for 15 seconds. The average of the measured values is used as the "hardness Hvh of the HAZ softened region 61."

As described above, in the present invention, the hardness on the high strength steel sheet side is specified. Therefore, for example, in the example shown in Fig. 1, the high strength steel sheet is used on the steel sheet 2 side. In this case, the "straight line Z" is a line drawn on the steel sheet 2 side, and the "thickness direction between the straight line Z and the faying surface 7" is the thickness direction on the steel sheet 2 side. Alternatively, when the high strength steel sheet is used for the steel sheet 1 on the lower side, the "straight line Z" is a line drawn in the steel sheet 1 on the lower side, and the "thickness direction between the straight line Z and the faying surface 7" is the thickness direction on the steel sheet 1 side.

When a sheet set including two overlapping high strength steel sheets of the same type is used, the hardnesses are measured using the upper steel sheet 2. When a sheet set including two overlapping high strength steel sheets of different types is used, the hardnesses on the low-strength steel sheet side are measured.

If the hardness Hvh of the HAZ softened region 61 and the hardness Hvm of the central portion of the nugget 3 do not satisfy the relation of formula (5), the vicinity of the edge portion of the nugget is not sufficiently tempered and has a hardened microstructure, and the microstructure and hardness of the edge portion of the nugget edge region 31 cannot be controlled within the above-described ranges. Therefore, the improvement of the toughness of the edge portion of the nugget and the relaxation of stress concentration in the edge portion cannot be achieved. The hardness Hvh of the HAZ softened region 61 is preferably equal to or less than 0.85 times the hardness Hvm of the central portion of the nugget 3 and more preferably equal to or less than 0.80 times the hardness Hvm of the central portion of the nugget 3.

In the present invention, no particular limitation is imposed on the lower limit of the hardness Hvh of the HAZ softened region 61. Even when the entire microstructure of the HAZ softened region 61 is tempered martensite, the HAZ softened region 61 has a certain hardness. Therefore, the hardness Hvh of the HAZ softened region 61 is preferably equal to or more than 0.40 times the hardness Hvm of the central portion of the nugget 3, more preferably equal to or more than 0.45 times the hardness Hvm of the central portion of the nugget 3, and still more preferably equal to or more than 0.60 times the hardness Hvm of the central portion of the nugget 3.

In the present invention, the weld has the features described above. When the weld further has the following features, the effects of the invention are further enhanced.

[Carbide in HAZ softened region]

In the HAZ softened region 61, the average number density of carbide particles having a diameter of 100 nm or more per 5 $\mu m^2$ in a cross section of the sheets is preferably 10 or more.

The reason that the diameter of the carbide particles is set to 100 nm or more is to check whether the tempering has proceeded sufficiently to allow coarse carbide particles to be formed. However, as the diameter of the carbide particles increases, precipitates other than carbide may be formed during tempering. Therefore, the diameter of the carbide particles is preferably 500 nm or less.

If the average number density of carbide particles in the HAZ softened region 61 is less than 10 per 5 $\mu m^2$ in a cross section of the sheets, the tempering is insufficient. In this case, the toughness of the edge portion of the nugget and the vicinity thereof is low, and the relaxation of stress concentration may not be achieved. Therefore, the average number density of the carbide particles is preferably 10 or more per 5 $\mu m^2$ in a cross section of the sheets, more preferably 20 or more per 5 $\mu m^2$ in a cross section of the sheets, and still more preferably 40 or more per 5 $\mu m^2$ in a cross section of the sheets. No particular limitation is imposed on the upper limit of the average number density of the carbide particles in the HAZ softened region 61. Even when the entire microstructure of the HAZ softened region 61 is tempered martensite, the fraction of the carbide does not reach 100%. Therefore, the average number density of the carbide particles is preferably 155 or less per 5 $\mu m^2$ in a cross section of the sheets, more preferably 90 or less per 5 $\mu m^2$ in a cross section of the sheets, still more preferably 80 or less per 5 $\mu m^2$ in a cross section of the sheets, and yet more preferably 70 or less per 5 $\mu m^2$ in a cross section of the sheets.

In the present invention, the diameters of the carbide particles and the average number density of the carbide particles can be measured by a method described later in Examples.

[Microstructure of HAZ]

The microstructure of the HAZ 6 includes tempered martensite and martensite.

When the microstructure of the HAZ 6 in the vicinity of the edge portion of the nugget includes tempered martensite, the improvement of the toughness of the HAZ in the vicinity of the nugget edge region 31 and the relaxation of stress concentration in the HAZ in the vicinity of the nugget edge region 31 can be achieved. For this reason, the microstructure of the HAZ softened region 61 in the vicinity of the nugget edge region 31 includes tempered martensite at an area fraction of 50% or more with respect to the total area of the HAZ softened region 61. The area fraction of the tempered martensite in the HAZ softened region 61 is more preferably 60% or more.

No particular limitation is imposed on the upper limit of the area fraction of the tempered martensite in the HAZ softened region 61. The reason for this is that, even when the area fraction of the tempered martensite in the HAZ softened region 61 is 100%, the effect of improving the toughness and the effect of relaxing stress concentration are expected to be achieved. Specifically, it is desirable that the area fraction of the tempered martensite in the HAZ softened region 61 is 100% or less.

The remaining microstructure of the HAZ softened region 61 other than the tempered martensite is martensite. However, if the amount of the microstructure other than the tempered martensite in the HAZ softened region 61 is large, it is difficult to achieve the improvement of the toughness of the nugget edge region 31 and the relaxation of stress concentration in the nugget edge region 31. Therefore, the area fraction of the remaining microstructure (martensite) in the HAZ softened region 61 is preferably less than 50% with respect to the total area of the HAZ softened region 61.

[High strength steel sheet]

The reasons for the limitations on the chemical composition of the base material in the high strength steel sheet in the resistance spot welded joint of the invention will be described. In the following description, "%" in the chemical composition represents "% by mass" unless otherwise specified.

C: 0.05 to 0.6%

C is an element contributing to strengthening of the steel. If the content of C is less than 0.05%, the strength of the steel is low, and it is very difficult to produce a steel sheet having a tensile strength of 780 MPa or more.

If the content of C exceeds 0.6%, although the strength of the steel sheet is high, the amount of hard martensite is excessively large, and the number of micro-voids increases. Moreover, the nugget and the HAZ therearound are excessively hardened and also embrittled, and it is difficult to improve the CTS. Therefore, the content of C is 0.05 to 0.6%. The content of C is preferably 0.10% or more and is preferably 0.45% or less.

Si: 0.1 to 2.0%

When the content of Si is 0.1% or more, Si acts effectively to strengthen the steel. Si is a ferrite-forming element and advantageously facilitates the formation of ferrite in the edge portion of the nugget. However, if the content of Si exceeds 2.0%, although the steel is strengthened, the toughness may be adversely affected. Therefore, the content of Si is 0.1 to 2.0%. The content of Si is preferably 0.2% or more and is preferably 1.8% or less.

Mn: 1.5 to 4.0%

If the content of Mn is less than 1.5%, high joint strength can be obtained even when a long cooling period used in the present invention is not applied. If the content of Mn exceeds 4.0%, the weld is embrittled, or significant cracking due to the embrittlement occurs, and it is therefore difficult to improve the joint strength. Therefore, the content of Mn is 1.5 to 4.0%. The content of Mn is preferably 2.0% or more and is preferably 3.5% or less.

P: 0.10% or less

P is an incidental impurity. If the content of P exceeds 0.10%, strong segregation occurs at the edge portion of the nugget of the weld, and it is therefore difficult to improve the joint strength. Therefore, the content of P is 0.10% or less. The content of P is preferably 0.05% or less and more preferably 0.02% or less. No particular limitation is imposed on the lower limit of the content of P. However, an excessive reduction in the content of P leads to an increase in cost. Therefore, the content of P is preferably 0.005% or more.

S: 0.005% or less

S is an element that segregates at grain boundaries to embrittle the steel. Moreover, S forms sulfides and reduces the local deformability of the steel sheets. Therefore, the content of S is 0.005% or less. The content of S is preferably 0.004% or less and more preferably 0.003% or less. No particular limitation is imposed on the lower limit of the content of S. However, an excessive reduction in the content of S leads to an increase in cost. Therefore, the content of S is preferably 0.001% or more.

N: 0.001 to 0.010%

N is an element that causes deterioration in the aging resistance of the steel. N is an incidentally contained element. Therefore, the content of N is 0.001 to 0.010%. The content of N is preferably 0.008% or less.
The high strength steel sheet used in the present invention contains the elements described above with the balance being Fe and incidental impurities.
In the present invention, the chemical composition described above is the basic chemical composition of the high strength steel sheet. In the present invention, the chemical composition may further contain one or two or more optional elements selected from Al, B, Ca, Cr, Cu, Ni, Mo, Ti, V, Nb, and O. The following elements Al, B, Ca, Cr, Cu, Ni, Mo, Ti, V, Nb, and O are optionally added, and the contents of these components may be 0%.

Al: 2.0% or less

Al is an element that allows control of the microstructure in order to obtain fine austenite grains. If the amount of Al added is excessively large, the toughness deteriorates. Therefore, when Al is contained, the content of Al is preferably 2.0% or less. The content of Al is more preferably 1.5% or less and is preferably 1.2% or more.

B: 0.005% or less

B is an element that can improve the hardenability of the steel to thereby strengthen the steel. Therefore, when B is contained, the content of B is preferably 0.0005% or more. The content of B is more preferably 0.0007% or more. Even if a large amount of B is added, the above effect is saturated. Therefore, the content of B is 0.005% or less. The content of B is more preferably 0.0010% or less.

Ca: 0.005% or less

Ca is an element that can contribute to an improvement in the workability of the steel. However, if a large amount of Ca is added, the toughness deteriorates. Therefore, when Ca is contained, the content of Ca is preferably 0.005% or less. The content of Ca is more preferably 0.004% or less and is preferably 0.001% or more.

Cr: 1.0% or less

Cr is an element that can improve the hardenability to thereby improve the strength. However, if the content of Cr is excessively large, i.e., more than 1.0%, the toughness of the HAZ may deteriorate. Therefore, when Cr is contained, the content of Cr is preferably 1.0% or less. The content of Cr is more preferably 0.8% or less and is preferably 0.01% or more.

Cu: 1.0% or less, Ni: 1.0% or less, and Mo: 1.0% or less

Cu, Ni, and Mo are elements that can contribute to an improvement in the strength of the steel. However, if large amounts of Cu, Ni, and Mo are added, the toughness deteriorates. Therefore, when these elements are contained, the content of Cu is preferably 1.0% or less, and the content of Ni is preferably 1.0% or less. Moreover, the content of Mo is preferably 1.0% or less. The content of Cu is more preferably 0.8% or less. The content of Cu is preferably 0.005% or more and more preferably 0.006% or more. The content of Ni is more preferably 0.8% or less and is preferably 0.01% or more. The content of Mo is more preferably 0.8% or less. The content of Mo is preferably 0.005% or more and more preferably 0.006% or more.

Ti: 0.20% or less

Ti is an element that can improve the hardenability of the steel to thereby strengthen the steel. However, if a large amount of Ti is added, carbide is formed, and the precipitation hardening causes the toughness to deteriorate significantly. Therefore, when Ti is contained, the content of Ti is preferably 0.20% or less. The content of Ti is more preferably 0.15% or less. The content of Ti is preferably 0.003% or more and more preferably 0.004% or more.

V: 0.50% or less

V is an element that allows control of the microstructure through precipitation hardening to thereby strengthen the steel. However, a large amount of V contained leads to deterioration of the toughness of the HAZ. Therefore, when V is contained, the content of V is preferably 0.50% or less. The content of V is more preferably 0.30% or less. The content of V is preferably 0.005% or more and more preferably 0.006% or more.

Nb: 0.20% or less

Nb forms fine carbonitride to thereby improve the CTS and delayed fracture resistance after resistance spot welding. To obtain this effect, the content of Nb is 0.005% or more. However, if a large amount of Nb is added, not only does the elongation decrease, but also the toughness deteriorates significantly. Therefore, the content of Nb is 0.20% or less. When Nb is contained, the content of Nb is preferably 0.20% or less. The content of Nb is more preferably 0.18% or less, still more preferably 0.15% or less, and yet more preferably 0.10% or less. The content of Nb is preferably 0.005% or more, more preferably 0.006% or more, and still more preferably 0.007% or more.
O is inevitably contained during the production process. When the content of O is within the following range, the above-mentioned effects of the invention are not impaired, and the presence of O is acceptable.

O: 0.03% or less

O (oxygen) is an element that forms non-metallic inclusions to cause deterioration in the cleanliness and toughness of the steel. Therefore, when O is contained, the content of O is preferably 0.03% or less. The content of O is more preferably 0.02% or less. The content of O is preferably 0.005% or more.
The high strength steel sheet having the above-described chemical composition may have a tensile strength of 780 MPa or more. The tensile strength of the high strength steel sheet is preferably 1180 MPa or more. In particular, when the tensile strength of the base material is 780 MPa or more as described above, the CTS may decrease, and the delayed fracture characteristics also deteriorate. According to the present invention, even when the tensile strength of the high strength steel sheet is 780 MPa or more, since the microstructure of the edge portion of the nugget is the duplex microstructure described above and the microstructure of the HAZ is tempered martensite, the microstructures have high toughness. Therefore, brittle fracture of the edge portion of the nugget can be prevented. This can prevent a reduction in the CTS of the weld and delayed fracture. Naturally, with a high strength steel sheet having a tensile strength or less than 780 MPa, the above effects can be obtained.

[Type of coating on high strength steel sheet]

The high strength steel sheet in the invention may be subjected to galvanizing treatment to form a steel sheet having a galvanized layer on the surface thereof (a galvanized steel sheet). Even in this case, the above effects can be obtained. The galvanized layer is a coated layer containing zinc as a main component. The coated layer containing zinc as a main component may be a well-known galvanized layer, and examples of the coated layer containing zinc as a main component include a hot-dip galvanized layer, an electrogalvanized layer, a Zn-Al coated layer, and a Zn-Ni layer. The high strength steel sheet in the invention may be a galvannealed steel sheet formed by subjecting the steel sheet to the galvanizing treatment and then to alloying treatment to thereby form a galvannealed layer on the surface of the base material.

In the present invention, the overlapping steel sheets may be a plurality of overlapping steel sheets of the same type or a plurality of overlapping steel sheets of different types. A steel sheet having a galvanized layer on the surface thereof (a surface-treated steel sheet) and a steel sheet having no galvanized layer on the surface thereof (a cold rolled steel sheet) may be disposed so as to overlap each other. The thicknesses of the steel sheets may be the same or different, and no problem arises in either case. From the viewpoint of applying the steel sheets to general automobile steel sheets, the thicknesses of the steel sheets are, for example, preferably 0.4 mm to 2.2 mm.

[Resistance spot welding method]

Next, an embodiment of a resistance spot welding method for producing the resistance spot welded joint of the invention including the weld described above will be described.

The resistance spot welded joint of the invention can be produced by resistance spot welding in which a sheet set including two or more overlapping steel sheets including at least one high strength steel sheet described above is held between a pair of welding electrodes and joined together by energizing the sheet set under the application of pressure.

For example, as shown in Fig. 4, two steel sheets 1 and 2 are disposed so as to overlap each other to thereby form a sheet set. Next, the sheet set is held between a pair of welding electrodes 4 and 5 disposed on the lower and upper sides of the sheet set, and energization is performed under the application of pressure while the welding conditions are controlled to prescribed conditions. In this manner, the steel sheets are joined together at their interface that later becomes the faying surface 7 between the steel sheets, and the weld described above can thereby be formed (see Fig. 1). When a high strength cold rolled steel sheet and a high strength galvanized steel sheet are disposed so as to overlap each other to thereby form a sheet set, the steel sheets are disposed so as to overlap each other such that the surface of the high strength galvanized steel sheet that includes the galvanized layer faces the high strength cold rolled steel sheet.

In the present invention, the step of energizing the overlapping steel sheets 1 and 2 held between the welding electrodes 4 and 5 includes a primary energization step and a post-weld tempering heat treatment step. These steps in the invention will be described in detail.

<Primary energization step>

The primary energization step is the step of forming a nugget 3 having the required size by melting the faying surface 7 between the steel sheets 1 and 2 (see Fig. 4). In the primary energization step, the energization is performed at a current value $I_1$ (kA) to form the nugget.

Generally, the diameter of nuggets used for resistance spot welds (welds) of automotive steel sheets is $3.0\sqrt{t}$ to $6.0\sqrt{t}$ (t (mm) is the sheet thickness). In the present invention, the above numerical range is referred to as the "target nugget diameter." In the primary energization step in the invention, no particular limitation is imposed on the energization conditions and pressurizing conditions for forming the nugget 3, so long as the nugget 3 obtained has the target nugget diameter.

From the viewpoint of using the high strength steel sheet in the invention for the overlapping steel sheets and stably forming a nugget 3 having the target nugget diameter on the faying surface between the steel sheets, it is preferable to control the energizing conditions and pressurizing conditions in the primary energization step as follows.

The current value $I_1$ (kA) in the primary energization step is preferably 3.0 kA to 8.0 kA. If the current value $I_1$ is excessively small, the target nugget diameter cannot be obtained stably. If the current value $I_1$ is excessively large, the nugget diameter may be excessively large, or the degree of melting of the steel sheets may be large. In this case, the molten weld splashes out of the sheet gap, so that the nugget diameter may decrease. Because of the above reasons, the current value $I_1$ is 3.0 kA to 8.0 kA. The current value $I_1$ is more preferably 4.5 kA or more and still more preferably 6.0 kA or more. The current value $I_1$ is more preferably 7.5 kA or less and still more preferably 7.3 kA or less. However, the current value $I_1$ may be smaller or larger than the above numerical range so long as the required nugget diameter is obtained.

The energization time $t_1$ (ms) in the primary energization step is preferably 120 ms to 400 ms. Like the current value $I_1$, the energization time $t_1$ is the time required to stably form a nugget 3 having the target nugget diameter. If the energization time $t_1$ is shorter than 120 ms, it is feared that the nugget may be unlikely to form. If the energization time $t_1$ exceeds 400 ms, it is feared that the diameter of the nugget formed may be larger than the target nugget diameter and that the workability may deteriorate. However, so long as the required nugget diameter is obtained, the energization time $t_1$ may be shorter or longer than the above numerical range.

As for the pressurizing conditions in the primary energization step, the welding force is preferably 2.0 kN to 7.0 kN. If the welding force is excessively large, the energization diameter increases, and it is therefore difficult to ensure the nugget diameter. If the welding force is excessively small, the energization diameter is small, and splashes are easily generated. Because of the above reasons, the welding force is 2.0 kN to 7.0 kN. The welding force is more preferably 3.0 kN or more and is more preferably 6.5 kN or less. In some cases, the welding force is limited by the ability of the device used. The welding force may be lower than or higher than the above numerical range, so long as the required nugget diameter can be obtained using the welding force.

<Post-weld tempering heat treatment step>

The post-weld tempering heat treatment step is a post-weld heat treatment step performed in order to change the microstructure of the edge portion of the nugget formed in the primary energization step to the microstructure including ferrite (the duplex microstructure described above) and to temper the HAZ. In the post-weld tempering heat treatment step performed after the primary energization step, the edge portion of the nugget and the HAZ region in the vicinity of the edge portion are subjected to cooling processes (a first cooling process and a second cooling process) and a heating process. If necessary, a first holding process is performed, or the first holding process and a secondary energization process are performed. To obtain the effect of improving the toughness of the edge portion of the nugget and the effect of relaxing stress concentration in the edge portion of the nugget, it is important that the welding conditions in the above processes in the post-weld tempering heat treatment step be controlled as follows.

[Cooling process (first cooling process)]

First, after the primary energization step, cooling is performed to a temperature at which the edge portion of the nugget undergoes martensitic transformation (the first cooling process). In the first cooling process, to obtain the effect of tempering described later sufficiently, a non-energization state is maintained for a cooling time $t_{c1}$ (ms) shown in formula (6) to cool the weld.

$$800 \leq t_{c1} \qquad (6)$$

If the cooling time $t_{c1}$ (ms) in the first cooling process is shorter than 800 ms, the martensitic transformation does not occur sufficiently, and martensite is not formed. In the microstructure in this case, austenite remains present. Therefore, even when the subsequent heating process is performed, the austenite remains present, and finally a martensite microstructure is formed. In this case, the edge portion of the nugget has an embrittled microstructure, and the CTS is not improved. Therefore, the cooling time $t_{c1}$ (ms) is 800 ms or longer. The cooling time $t_{c1}$ is preferably 850 ms or longer and more preferably 900 ms or longer.
No particular limitation is imposed on the upper limit of the cooling time $t_{c1}$ (ms) in the first cooling process. Since the steel sheets used in the invention are steel sheets for automobiles, a long welding time causes a reduction in working efficiency. Therefore, the cooling time $t_{c1}$ (ms) is preferably 2200 ms or shorter and more preferably 2000 ms or shorter.

[Heating process]

After the first cooling process, the heating process is performed. In the first cooling process performed after the primary energization step, the edge portion of the nugget and the region within the HAZ in the vicinity of the edge portion are cooled to the temperature at which martensite transformation occurs. Then, in the heating process, energization (secondary energization) for heating in an appropriate temperature range is performed in order to temper the martensite microstructure. The "appropriate temperature range" is a temperature range in which the microstructure of the edge portion of the nugget (specifically, the nugget edge region 31) is changed to the duplex microstructure including ferrite.
Specifically, in the heating process, the weld is energized at a current value $I_2$ (kA) shown in formula (7) for an energization time $t_2$ (ms) shown in formula (8).

$$I_1 < I_2 \leq 1.8 \times I_1 \qquad (7)$$

$$100 < t_2 \leq 300 \qquad (8)$$

Generally, even when the energization is performed with the current value during the energization after the primary energization step set to be constant, the temperature of the edge portion of the nugget increases as the energization time increases. Therefore, the tempering in the target temperature range is transitory.

Accordingly, in the present invention, it is particularly important to increase a current for the initial energization after the primary energization step (i.e., the energization in the heating process) to thereby increase the temperature of the edge portion of the nugget and the region in the vicinity thereof to the "above-described appropriate temperature," i.e., a temperature in the temperature range of from the $Ac_3$ temperature to the $Ac_1$ temperature inclusive, rapidly in a short time (see Figs. 5 and 6). In this manner, the microstructure of the edge portion of the nugget can be changed to the duplex microstructure including ferrite, and the HAZ in the vicinity of the edge portion of the nugget can be tempered effectively.

If the current value $I_2$ in this process is excessively small, the effect of tempering is reduced. If the current value $I_2$ in this process is excessively large, the temperature exceeds the $Ac_3$ temperature, and therefore the HAZ in the vicinity of the edge portion of the nugget cannot be tempered. Moreover, when the edge portion of the nugget is a martensite single phase microstructure, the HAZ in the vicinity of the edge portion of the nugget becomes a martensite single phase microstructure or a duplex microstructure including martensite and ferrite through energization in the subsequent process. Therefore, the relaxation of stress concentration in the edge portion of the nugget and the improvement of the toughness cannot be achieved. When the edge portion of the nugget is a tempered martensite single phase microstructure, the microstructure of the edge portion of the nugget becomes a softened microstructure through energization in the subsequent process. In this case, cracks formed under a CTS load propagate into the nugget, and the stress concentration cannot be relaxed. It is therefore important that the temperature be controlled appropriately such that the edge portion of the nugget has the duplex microstructure described above.

Because of the reasons described above, the current value $I_2$ (kA) in the heating process satisfies the relation $I_1 < I_2 \leq 1.8 \times I_1$. If the current value $I_2$ in the heating process is equal to or less than the current value $I_1$ (kA) in the primary energization step, the temperature is lower than the $Ac_1$ temperature, so that the edge portion of the nugget cannot be tempered effectively. The current value $I_2$ in the heating process is preferably $(1.01 \times I_1)$ (kA) or more, more preferably $(1.05 \times I_1)$ (kA) or more, and still more preferably $(1.10 \times I_1)$ (kA) or more.

If the current value $I_2$ in the heating process exceeds $(1.8 \times I_1)$ (kA), it is highly possible that the temperature may exceed the $Ac_3$ temperature. In this case, the microstructure of the edge portion of the nugget is again transformed to austenite in the subsequent process and then finally becomes martensite, so that the edge portion of the nugget is embrittled. Specifically, the HAZ in the vicinity of the edge portion of the nugget cannot be tempered, and therefore the toughness of the edge portion of the nugget is not sufficient. The current value $I_2$ in the heating process is preferably $(1.7 \times I_1)$ (kA) or less, more preferably $(1.6 \times I_1)$ (kA) or less, and still more preferably $(1.5 \times I_1)$ (kA) or less.

As described above, since the temperature is rapidly increased in a short time, the energization time $t_2$ (ms) in the heating process is $100 < t_2 \leq 300$. The energization time $t_2$ is preferably 120 ms or longer and more preferably 140 ms or longer. The energization time $t_2$ is preferably 280 ms or shorter and more preferably 240 ms or shorter.

[Cooling process (second cooling process)]

After the heating process, cooling for tempering the HAZ (the second cooling process) is performed. In the second cooling process, a non-energization state is maintained for a cooling time $t_{c2}$ (ms) shown in formula (9) to cool the weld.

$$0 < t_{c2} < 300 \qquad (9)$$

The cooling time $t_{c2}$ (ms) in the second cooling process is longer than 0 ms and shorter than 300 ms. By providing the cooling time $t_{c2}$, a rapid increase in the temperature of the edge portion of the nugget can be avoided. Moreover, a rapid increase in the temperature when energization is performed in optional subsequent processes can be avoided. Therefore, the temperature of the edge portion of the nugget after the heating process can be maintained constant. Even when the cooling time in the second cooling process is short, a rapid increase in temperature can be avoided. However, if the cooling time in this process is long, the overall procedure time increases. Therefore, the cooling time $t_{c2}$ is preferably 20 ms or longer. The cooling time $t_{c2}$ is preferably shorter than 200 ms and more preferably 150 ms or shorter.

By performing resistance spot welding under the welding conditions described above, the weld in the invention is obtained. From the viewpoint of producing the weld in a more stable manner, the post-weld tempering heat treatment step may include the following optional processes after the second cooling process.

[First holding process]

The first holding process is an optionally performed process. When the post-weld tempering heat treatment step further includes the first holding process, the first holding process is performed after the second cooling process. In the first holding process, the weld is energized at a current value $I_3$ (kA) shown in formula (10) for an energization time $t_3$ (ms) shown in formula (11).

$$0 < I_3 < I_2 \qquad (10)$$

$$0 < t_3 < 2000 \qquad (11)$$

From the viewpoint of appropriately controlling the temperature to temper the HAZ more effectively, the current value $I_3$ (kA) in the first holding process is preferably less than the current value $I_2$ (kA) in the heating process. When the current value $I_3$ in the first holding process is lower than the current value $I_2$ in the heating process, the edge portion of the nugget and the vicinity thereof can be held at a temperature equal to or lower than the $Ac_3$ temperature. If the current value $I_3$ in the first holding process is higher than the current value $I_2$ (kA) in the heating process, the temperature of the edge portion of the nugget and the vicinity thereof can be again increased to the $Ac_3$ temperature or higher. In this case, the HAZ in the vicinity of the edge portion of the nugget may not be tempered.

Even when the current value $I_3$ in the first holding process is low, the temperature increased in the heating process can be maintained by performing the first holding process. It is therefore desirable that the current value in the first holding process is more than 0 kA. Preferably, the current value $I_3$ in the first holding process is more than 0 kA and less than the current value $I_2$ kA in the heating process. The current value $I_3$ is more preferably equal to or less than $(0.95 \times I_2)$ (kA) and more preferably equal to or more than $(0.2 \times I_2)$ (kA).

The energization time $t_3$ (ms) in the first holding process is preferably longer than 0 ms and shorter than 2000 ms. The heating process is the step of increasing the temperature, so that a high current value is necessary. However, the first holding process is a step in which the temperature increased in the heating process is maintained to thereby temper the HAZ. Therefore, the energization time $t_3$ in the first holding process may be long. However, from the viewpoint of the efficiency of the procedure, the energization time $t_3$ is shorter than 2000 ms. Even when the energization time $t_3$ is short, the effect of tempering can be higher so long as the first holding process is performed, so that the energization time $t_3$ in the first holding process is preferably longer than 0 ms. The energization time $t_3$ is more preferably 1800 ms or shorter and still more preferably 1600 ms or shorter. The energization time $t_3$ is more preferably 150 ms or longer and still more preferably 200 ms or longer.

[Secondary energization process]

The secondary energization process is an optionally performed process. When the post-weld tempering heat treatment step further includes the secondary energization process, the secondary energization process is performed after the first holding process.

In the secondary energization process, a third cooling process in which a non-energization state is maintained for a cooling time $t_{c3}$ (ms) shown in formula (12) is provided, and then a second holding process is performed in which the resistance spot weld is energized at a current value $I_4$ equal to or more than 0.1 times and equal to or less than 1.3 times the current value in the process including last energization for an energization time $t_4$ of longer than 0 ms and 2000 ms or shorter.

$$t_{c3} < 300 \qquad (12)$$

The "process including last energization" is the process including the first previous energization performed prior to the present energization process. Specifically, when, for example, the heating process and the first holding process are performed before the initial secondary energization process, the "current value in the process including last energization" is the current value in the first holding process. When, for example, the first holding process is not performed after the heating process, the "current value in the process including last energization" is the current value in the heating process.

The third cooling process and the second holding process in the secondary energization process may be performed only once or may be repeated a plurality of times. For example, Fig. 7 shows an example of an energization pattern in the present invention. As shown in the example in Fig. 7, in the post-weld tempering heat treatment step after the primary energization step, the first cooling process, the heating process, the second cooling process, the first holding process, and two secondary energization processes may be performed in this order.

[Third cooling process in secondary energization process]

As described above, the secondary energization process can be performed in order to obtain the above operational effects more effectively. In this case, the third cooling process is performed for the purpose of preventing an increase in temperature due to the secondary energization process performed. Therefore, the cooling time $t_{c3}$ (ms) in the third cooling process is preferably shorter than 300 ms. The cooling time $t_{c3}$ is more preferably 250 ms or shorter and still more preferably 100 ms or shorter. No particular limitation is imposed on the lower limit of the cooling time $t_{c3}$, but the cooling time $t_{c3}$ is preferably 10 ms or longer, more preferably 20 ms or longer, and still more preferably 40 ms or longer.

[Second holding process in secondary energization process]

The second holding process in the secondary energization process is performed for the purpose of maintaining the temperature of the secondary energization. If the current value $I_4$ (kA) in the second holding process in the secondary energization process does not satisfy the relation that the current value $I_4$ (kA) is equal to or more than 0.1 times and equal to or less than 1.3 times the current value in the process including last energization, the temperature of the secondary energization increases excessively. In this case, the tempering effect of the secondary energization process performed is difficult to obtain. Preferably, the current value $I_4$ in the second holding process satisfies the relation that the current value $I_4$ is equal to or more than 0.90 times and equal to or less than 0.95 times the current value in the process including last energization.

If the energization time $t_4$ (ms) in the second holding process in the secondary energization process does not satisfy the relation that the energization time $t_4$ is longer than 0 ms and 2000 ms or shorter, the tempering effect is difficult to obtain. The energization time $t_4$ in the second holding process is preferably 300 ms or longer and is preferably 500 ms or shorter.

The number of repetitions of the third cooling process and the second holding process in the secondary energization process is preferably 2 or more. The number of repetitions is preferably 5 or less and more preferably 4 or less.

As described above, in the resistance spot welding method of the invention, the welding conditions in the postweld tempering heat treatment step are controlled appropriately, and the microstructure of the edge portion of the nugget in the weld thereby becomes the duplex microstructure including ferrite. By controlling the welding conditions appropriately, the temperature of the edge portion of the nugget is close to the $Ac_1$ temperature, and the HAZ in the vicinity of the edge portion of the nugget is locally tempered. In the welded joint obtained in this manner, stress concentration in the edge portion of the nugget can be relaxed, and the toughness of the edge portion of the nugget can be improved.

Specifically, in the welded joint having the weld in the invention, a ductile fracture surface is obtained to prevent interface failure, and plug failure or partial plug failure in which most of the plug remains can be obtained. In this manner, the joint strength (CTS) of the welded joint obtained can be improved. Moreover, since the HAZ in the vicinity of the edge portion of the nugget is tempered, the delayed fracture resistance of the welded joint can be further improved. Therefore, even when the sheet set includes a steel sheet having the above-described steel sheet chemical composition as the high strength steel sheet, the joint strength (CTS) and the delayed fracture resistance can be further improved.

EXAMPLES

The operations and effects of the present invention will be described by way of Examples. However, the present invention is not limited to the following Examples.

Steel sheets (steel sheets A to J) shown in Tables 1 and 2 and having a tensile strength of 780 MPa to 1470 MPa and a thickness of 0.8 to 1.2 mm were used as test specimens. The size of each test specimen was long sides: 150 mm and short sides: 50 mm. Table 1 shows the chemical composition of each of the steel sheets A to J. "-" in Table 1 indicates that the corresponding element is not added intentionally and is intended to include not only the case where the compound is not contained (0%) but also the case where the compound is incidentally contained. "GA steel sheet" shown in Table 2 means the galvannealed steel sheet described above.

In the Examples, as shown in Fig. 4, a servo motor pressurizing-type resistance welding device attached to a C gun and including a DC power source was used to perform resistance spot welding on a sheet set including a plurality of overlapping steel sheets (the lower steel sheet 1 and the upper steel sheet 2 in the example shown in Fig. 4).

First, the obtained steel sheets were disposed so as to overlap each other as shown in Table 2 to form sheet sets. As for "First sheet" and "Second sheet" in "Stacking position of steel sheet" in Table 2, the steel sheets are counted from the lower side. Next, each of the sheet sets was used to perform resistance spot welding under welding conditions shown in Table 3-1 or 3-2 to form a nugget 3 having a required size between the sheets, and a resistance spot welded joint was thereby produced. In some sheet sets, three steel sheets were disposed so as to overlap each other. "-" in Tables 3-1 and 3-2 indicates that the corresponding process was not performed.

The other welding conditions were as follows. The welding force during energization was constant and was 3.5 kN in the Examples. A welding electrode 4 on the lower side of the sheet set and a welding electrode 5 on the upper side were each a chromium-copper made DR type electrode having a tip end with a diameter of 6 mm and a radius of curvature of 40 mm. The lower welding electrode 4 and the upper welding electrode 5 were used to control the welding force, and the welding was performed using the DC power source. The nugget was formed such that its diameter was equal to or less than 5.5Vt (mm). Here, t (mm) is the sheet thickness.

Each of the obtained resistance spot welded joints was used, and a cross tensile test was performed using a method described below to evaluate the CTS. The delayed fracture resistance was evaluated using a method described below, and the microstructure of the edge portion of the nugget, the hardness of the nugget, the hardness of the HAZ, the diameter of carbide particles in the HAZ, and the average number density of the carbide particles were measured using methods described below.

[Evaluation of CTS]

The CTS was evaluated based on the cross tensile test. Each of the produced resistance spot welded joints was used to perform the cross tensile test according to a method specified in JIS Z 3137 to measure the CTS (cross tension strength). When the measured value was JIS grade A (3.4 kN) or higher, the symbol "o" was assigned. When the measured value was lower than the JIS grade A, the symbol "×" was assigned. In the Examples, the evaluation symbol "o" means good, and the evaluation symbol "×" means poor. The evaluation results are shown in Tables 5-1 and 5-2.

[Evaluation of delayed fracture resistance]

The delayed fracture resistance was evaluated using the following method. Each of the resistance spot welded joints produced was left to stand in air at room temperature (20°C) for 24 hours, immersed in an aqueous solution of 3% NaCl + 1.0% $NH_4SCN$, and then subjected to cathodic electrolytic charging at a current density of 0.07 mA/cm$^2$ for 96 hours, and then the presence or absence of delayed fracture was checked. When no delayed fracture was found in the welded joint after immersion, the symbol "o" was placed in Table 5-1 or 5-2. When delayed fracture was found after immersion, the symbol "×" was placed in Table 5-1 or 5-2. The evaluation symbol "o" means "good delayed fracture resistance."

[Evaluation of joint]

In the Examples, the results of the evaluation of the CTS and the evaluation of the delayed fracture resistance were used to evaluate each of the joints. In Tables 5-1 and 5-2, when both the rating of the CTS and the rating of the delayed fracture resistance were "o," the joint was rated "o (pass)." When one of the rating of the CTS and the rating of the delayed fracture resistance was "×" or when both the rating of the CTS and the rating of the delayed fracture resistance were "×," the joint was rated "× (fail)."

[Evaluation of microstructure of nugget]

The microstructure of the edge portion of each of the nuggets was observed as follows. One of the resistance spot welded joints produced was cut at a position passing through the center of the nugget formed into a circular shape to thereby obtain a test specimen, and the test specimen was subjected to ultrasonic cleaning. Then the test specimen was embedded in a resin to obtain a sample, and a cross section of the sample taken in its thickness direction was etched using a nital solution to thereby prepare a sample.

Specifically, as shown in Fig. 1, two points at the intersections of the faying surface 7 between the steel sheets and the boundary of the nugget 3 are defined as a first edge 8 and a second edge 9, and the length of the line segment X connecting the first edge 8 to the second edge 9 is denoted as D (mm). Positions on the line segment X that are spaced toward the center of the nugget 3 from the first edge 8 and the second edge 9 are denoted as a point a and a point b, respectively. A region in which the distance L (mm) from the first edge 8 to the point a and the distance L (mm) from the second edge 9 to the point b satisfy the above-described formula (1) is defined as a nugget edge region 31. The length D of the line segment X is shown in Table 4-1 or 4-2. A sample was prepared such that the nugget edge region 31 served as an observation surface.

A scanning electron microscope (SEM) was used to observe the microstructure of the nugget edge region 31 of the sample at a magnification of 1000X to 100000X. As for the microstructures of the steel sheets, the area fraction of each microstructure was measured using a point count method (according to ASTM E562-83 (1988)). The obtained area fractions of the microstructures are shown in Table 4-1 or 4-2. In Tables 4-1 and 4-2, "F" for a microstructure represents ferrite, and "M" represents martensite.

[Hardness of nugget and hardness of HAZ]

Samples were prepared using the same method as that for the evaluation of the microstructure. The hardness of the nugget and the hardness of the HAZ were measured using a Vickers hardness meter by a method specified in JIS Z 2244. As for the measurement load conditions, an indenter of 300 gf was used to apply a load for 15 seconds.

The measurement position of the "Hardness of central portion of nugget" shown in each of Tables 4-1 and 4-2 was a position on the line segment X at the center between the first edge and the second edge. The value measured at this position was used as the hardness Hvm of the central portion of the nugget.

The "Hardness of softest portion of nugget edge region" shown in each of Tables 4-1 and 4-2 was determined as follows. Positions on the line segment X inside the nugget edge region were used as measurement positions. The measurement was performed along the line segment X at intervals of 0.2 (mm) toward the inner side of the nugget from the first edge and the second edge, and the measured values were used. The smallest value of the measured values obtained was used as the hardness Hv of the softest portion of the nugget edge region.

The measurement positions of the "Hardness of HAZ softened region" shown in each of Tables 4-1 and 4-2 were positions inside the HAZ softened region.

Specifically, as shown in Fig. 1, the intersection of the straight line Z parallel to the faying surface and the boundary of the nugget is denoted as a point q, and a position on the straight line Z within the heat-affected zone is denoted as a point r. A region inside the heat-affected zone in which the distance M (mm) between the straight line Z and the faying surface in the thickness direction satisfies the relation of formula (3) and in which the distance T (mm) from the point q to the point r satisfies the relation of formula (4) is defined as a HAZ softened region. A sample was prepared such that the HAZ softened region served as an observation surface.

The "Hardness of HAZ softened region" shown in each of Tables 4-1 and 4-2 was determined as follows. The first edge 8 (the edge portion of the nugget) was used as the origin. The measurement was performed in the HAZ softened region at intervals of 0.2 (mm) from the edge portion of the nugget in the direction toward the base material and at intervals of 0.2 (mm) from the edge portion of the nugget in the direction toward the steel sheet surface, and the measured values were used. The average of the measured values was used as the hardness Hvh of the HAZ softened region.

The hardness of the nugget and the hardness of the HAZ are shown in Table 4-1 or 4-2.

As described above, in the present invention, the hardness on the high strength steel sheet side is specified. Therefore, for example, when the high strength steel sheet is used for the steel sheet 2 in the example shown in Fig. 1, the "straight line Z" is a line drawn on the steel sheet 2 side, and the "thickness direction between the straight line Z and the faying surface 7" is the thickness direction on the steel sheet 2 side. When the high strength steel sheet is used for the steel sheet 1 on the lower side, the "straight line Z" is a line drawn in the steel sheet 1 on the lower side, and the "thickness direction between the straight line Z and the faying surface 7" is the thickness direction on the steel sheet 1 side. Therefore, in Examples (sheet sets k and l) in which the high strength steel sheet in the invention was used only for the lower steel sheet, the hardness of the lower steel sheet was measured.

For sheet sets in which two high strength steel sheets of the same type were stacked, the upper steel sheet 2 was used for the measurement of hardness. For sheet sets in which two high strength steel sheets of different types were stacked, i.e., for sheet sets c, d, e, o, and p, the hardness of a lower-strength steel sheet was measured.

[Evaluation of microstructure of HAZ]

The microstructure of the HAZ was also observed using the same method as that for the evaluation of the microstructure of the nugget.

Specifically, as shown in Fig. 1, the steel sheet microstructure in the HAZ softened region was observed. A sample was prepared such that the HAZ softened region served as an observation surface. This sample was used to observe the microstructure of the nugget edge region 31 under a scanning electron microscope (SEM) at a magnification of 1000X to 100000X. As for the microstructures of the steel sheets, the area fraction of each microstructure was measured using a point count method (according to ASTM E562-83 (1988)). The obtained area fractions of the microstructures are shown in Table 4-1 or 4-2. In Tables 4-1 and 4-2, "TM" for a microstructure represents tempered martensite, and "M" represents martensite.

[Diameter and average number density of carbide particles in HAZ softened region]

The steel sheet microstructure of the HAZ softened region was observed as shown in Fig. 1. Specifically, a thicknesswise cross section of one of the resistance spot welded members obtained was polished and etched with 3% nital, and a sample with the HAZ softened region serving as an observation surface was thereby prepared. The observation surface of this sample was observed using a TEM (transmission electron microscope) at a magnification of 10000X. Then Image-Pro was used to compute the equivalent circle diameters of cementite particles with the lower limit set to 0.005 um to thereby determine the diameters of the cementite particles.

The average number density (particles / 5 $\mu$m$^2$) of cementite particles having a diameter of 100 nm or more was determined as follows. The observation surface was observed using the TEM at a magnification of 10000X, and the number density per 5 $\mu$m$^2$ in the sheet cross section was determined at randomly selected 5 positions. The average of the obtained values was used as the average number density of carbide particles having a diameter of 100 nm or more per 5 $\mu$m$^2$ in the sheet cross section. The average number density is shown in Table 4-1 or 4-2.

When the diameters of the carbide particles are large, these particles can be precipitates other than carbide formed during the tempering. Therefore, the diameters of the carbide particles are set to 500 nm or less.

[Table 1]

| Steel sheet | Chemical composition (% by mass) | | | | | | | | | | | | | | | | | Remarks |
|---|---|---|---|---|---|---|---|---|---|---|---|---|---|---|---|---|---|---|
| | C | Si | Mn | P | S | N | Cu | Ni | Mo | Cr | Nb | V | Ti | B | Al | Ca | O | |
| A | 0.20 | 1.3 | 3.0 | 0.01 | 0.001 | 0.003 | - | - | - | - | - | - | - | - | - | - | - | Steel sheet A |
| B | 0.10 | 0.2 | 4.0 | 0.01 | 0.001 | 0.002 | - | - | - | 0.40 | - | - | - | - | - | - | - | Steel sheet B |
| C | 0.20 | 1.1 | 2.0 | 0.01 | 0.002 | 0.002 | - | - | - | - | | 0.05 | - | - | - | 0.005 | 0.010 | Steel sheet C |
| D | 0.13 | 0.9 | 3.5 | 0.01 | 0.001 | 0.005 | 0.20 | 0.30 | | - | - | - | - | - | 0.03 | - | - | Steel sheet D |
| E | 0.50 | 0.5 | 1.5 | 0.03 | 0.001 | 0.002 | - | - | - | - | - | - | - | - | - | - | - | Steel sheet E |
| F | 0.30 | 1.5 | 2.5 | 0.01 | 0.001 | 0.003 | - | - | - | - | - | - | 0.03 | 0.002 | - | - | - | Steel sheet F |
| G | 0.60 | 0.9 | 1.5 | 0.01 | 0.001 | 0.002 | - | - | 0.20 | - | - | - | - | - | - | - | - | Steel sheet G |
| H | 0.40 | 1.2 | 2.0 | 0.01 | 0.001 | 0.002 | - | - | - | - | 0.05 | - | - | - | - | - | - | Steel sheet H |
| I | 0.65 | 2.0 | 1.5 | 0.01 | 0.001 | 0.002 | - | - | - | - | - | - | - | - | - | - | - | Comparative steel I |
| J | 0.40 | 0.5 | 5.0 | 0.01 | 0.001 | 0.002 | - | - | - | - | - | - | - | - | - | - | - | Comparative steel J |

[Table 2]

| Sheet set | Stacking position of steel sheet | Steel sheet | Type of steel sheet | Tensile strength | Thickness of steel sheet |
|---|---|---|---|---|---|
| a | First sheet | Cold rolled steel sheet | Steel sheet A | 1180 MPa | 1.2 mm |
| a | Second sheet | Cold rolled steel sheet | Steel sheet A | 1180 MPa | 1.2 mm |
| b | First sheet | Cold rolled steel sheet | Steel sheet B | 1180 MPa | 1.2 mm |
| b | Second sheet | Cold rolled steel sheet | Steel sheet B | 1180 MPa | 1.2 mm |
| c | First sheet | Cold rolled steel sheet | Steel sheet A | 1180 MPa | 1.2 mm |
| c | Second sheet | Cold rolled steel sheet | Steel sheet B | 1180 MPa | 1.2 mm |
| d | First sheet | Cold rolled steel sheet | Steel sheet A | 1180 MPa | 1.2 mm |
| d | Second sheet | Cold rolled steel sheet | Steel sheet C | 980 MPa | 1.2 mm |
| e | First sheet | Cold rolled steel sheet | Steel sheet A | 1180 MPa | 1.2 mm |
| e | Second sheet | Cold rolled steel sheet | Steel sheet D | 780 MPa | 1.2 mm |
| f | First sheet | Cold rolled steel sheet | Steel sheet E | 1470 MPa | 1.2 mm |
| f | Second sheet | Cold rolled steel sheet | Steel sheet E | 1470 MPa | 1.2 mm |
| g | First sheet | Cold rolled steel sheet | Steel sheet F | 1470 MPa | 1.2 mm |
| g | Second sheet | Cold rolled steel sheet | Steel sheet F | 1470 MPa | 1.2 mm |
| h | First sheet | Cold rolled steel sheet | Steel sheet G | 1470 MPa | 1.2 mm |
| h | Second sheet | Cold rolled steel sheet | Steel sheet G | 1470 MPa | 1.2 mm |
| i | First sheet | Cold rolled steel sheet | Steel sheet H | 1470 MPa | 1.2 mm |
| i | Second sheet | Cold rolled steel sheet | Steel sheet H | 1470 MPa | 1.2 mm |
| j | First sheet | Cold rolled steel sheet | Comparative steel I | 1470 MPa | 1.2 mm |
| j | Second sheet | Cold rolled steel sheet | Comparative steel I | 1470 MPa | 1.2 mm |

(continued)

| Sheet set | Stacking position of steel sheet | Steel sheet | Type of steel sheet | Tensile strength | Thickness of steel sheet |
|---|---|---|---|---|---|
| k | First sheet | Cold rolled steel sheet | Steel sheet B | 1180 MPa | 1.2 mm |
| | Second sheet | Cold rolled steel sheet | Comparative steel I | 1470 MPa | 1.2 mm |
| l | First sheet | Cold rolled steel sheet | Steel sheet C | 1180 MPa | 1.2 mm |
| | Second sheet | Cold rolled steel sheet | Comparative steel J | 1470 MPa | 1.2 mm |
| m | First sheet | Cold rolled steel sheet | Steel sheet A | 1180 MPa | 0.8 mm |
| | Second sheet | Cold rolled steel sheet | Steel sheet A | 1180 MPa | 0.8 mm |
| | Third sheet | Cold rolled steel sheet | Steel sheet A | 1180 MPa | 0.8 mm |
| n | First sheet | GA steel sheet | Steel sheet A | 1180 MPa | 1.2 mm |
| | Second sheet | GA steel sheet | Steel sheet A | 1180 MPa | 1.2 mm |
| o | First sheet | GA steel sheet | Steel sheet A | 1180 MPa | 1.2 mm |
| | Second sheet | GA steel sheet | Steel sheet C | 1180 MPa | 1.2 mm |
| p | First sheet | GA steel sheet | Steel sheet A | 1180 MPa | 1.2 mm |
| | Second sheet | GA steel sheet | Steel sheet D | 1180 MPa | 1.2 mm |
| q | First sheet | GA steel sheet | Steel sheet F | 1470 MPa | 1.2 mm |
| | Second sheet | GA steel sheet | Steel sheet F | 1470 MPa | 1.2 mm |

[Table 3-1]

| Welding number | Sheet set | Primary energization step — Current value I₁ (kA) | Primary energization step — Energization time t₁ (ms) | First cooling process — Cooling time t_c1 (ms) | Heating process — Current value I₂ (kA) | Heating process — Energization time t₂ (ms) | Second cooling process — Cooling time t_c2 (ms) | First holding process — Current value I₃ (kA) | First holding process — Energization time t₃ (ms) | Third cooling process (1) — Cooling time t_c3 (ms) | Second holding process (1) — Current value I₄ (kA) | Second holding process (1) — Energization time t₄ (ms) | Second holding process (1) — Process including last energization | Third cooling process (2) — Cooling time t_c3 (ms) | Second holding process (2) — Current value I₄ (kA) | Second holding process (2) — Energization time t₄ (ms) | Second holding process (2) — Process including last energization | Number of repetitions (times) | Remarks |
|---|---|---|---|---|---|---|---|---|---|---|---|---|---|---|---|---|---|---|---|
| 1 | a | 6.5 | 280 | - | - | - | - | - | - | - | - | - | - | - | - | - | - | 0 | Comparative Example |
| 2 | a | 6.5 | 280 | 1200 | 7.0 | 200 | 100 | 6.8 | 1200 | - | - | - | - | - | - | - | - | 0 | Inventive Example |
| 3 | a | 6.5 | 280 | 850 | 7.5 | 120 | 40 | 7.3 | 1600 | 100 | 5 | 200 | First holding | - | - | - | - | 1 | Inventive Example |
| 4 | b | 6.5 | 280 | 1500 | 6.8 | 40 | 20 | 9.0 | 600 | - | - | - | - | - | - | - | - | 0 | Comparative Example |
| 5 | b | 6.5 | 280 | 1400 | 7.0 | 300 | 200 | 1.5 | 900 | - | - | - | - | - | - | - | - | 0 | Inventive Example |
| 6 | c | 6.5 | 250 | 1100 | 7.0 | 220 | 180 | - | - | - | - | - | - | - | - | - | - | 0 | Inventive Example |
| 7 | c | 6.5 | 250 | 1100 | 6.8 | 220 | 260 | 6.5 | 180 | 100 | 5 | 500 | First holding | - | - | - | - | 1 | Inventive Example |

25

(continued)

| Welding number | Sheet set | Primary energization step — Current value I$_1$ (kA) | Primary — Energization time t$_1$ (ms) | Heating process — First cooling process — Cooling time t$_{c1}$ (ms) | Heating process — Current value I$_2$ (kA) | Heating process — Energization time t$_2$ (ms) | Second cooling process — Cooling time t$_{c2}$ (ms) | First holding process — Current value I$_3$ (kA) | First holding process — Energization time t$_3$ (ms) | Third cooling process (1) — Cooling time t$_{c3}$ (ms) | Second holding process (1) — Current value I$_4$ (kA) | Second holding process (1) — Energization time t$_4$ (ms) | Second holding process (1) — Process including last energization | Third cooling process (2) — Cooling time t$_{c3}$ (ms) | Second holding process (2) — Current value I$_4$ (kA) | Second holding process (2) — Energization time t$_4$ (ms) | Second holding process (2) — Process including last energization | Number of repetitions (times) | Remarks |
|---|---|---|---|---|---|---|---|---|---|---|---|---|---|---|---|---|---|---|---|
| 8 | d | 6.5 | 250 | 900 | 8.0 | 160 | 20 | 6.0 | 180 | 20 | 5 | 300 | First holding | 20 | 4.5 | 200 | Second holding (1) | 2 | Inventive Example |
| 9 | d | 6.7 | 250 | 860 | 11.0 | 60 | 20 | 4.5 | 1600 | - | - | - | - | - | - | - | - | 0 | Comparative Example |
| 10 | d | 4.5 | 280 | 1000 | 7.8 | 200 | 20 | 6.5 | 1500 | 20 | 5 | 300 | First holding | - | - | - | - | 1 | Inventive Example |
| 11 | e | 6.7 | 280 | 900 | 5.0 | 10 | 380 | 1.0 | 1000 | - | - | - | - | - | - | - | - | 0 | Comparative Example |
| 12 | e | 6.7 | 280 | 1000 | 6.9 | 120 | 40 | 5.0 | 1000 | 20 | 4.5 | 200 | First holding | - | - | - | - | 1 | Inventive Example |
| 13 | f | 6.5 | 280 | 900 | 8.0 | 140 | 20 | 4.5 | 1000 | - | - | - | - | - | - | - | - | 0 | Inventive Example |

Heading groups: Primary energization step | Post-weld tempering heat treatment step (Heating process; Secondary energization process — First holding process, Second holding process (1), Second holding process (2)).

(continued)

| Welding number | Sheet set | Primary energization step | | Post-weld tempering heat treatment step | | | | | | | | | | | | | | Number of repetitions (times) | Remarks |
| | | | | First cooling process | Heating process | | Second cooling process | First holding process | | Secondary energization process | | | | | | | | | |
| | | Current value I$_1$ (kA) | Energization time t$_1$ (ms) | Cooling time t$_{c1}$ (ms) | Current value I$_2$ (kA) | Energization time t$_2$ (ms) | Cooling time t$_{c2}$ (ms) | Current value I$_3$ (kA) | Energization time t$_3$ (ms) | Third cooling process (1) Cooling time t$_{c3}$ (ms) | Second holding process (1) Current value I$_4$ (kA) | Energization time t$_4$ (ms) | Process including last energization | Third cooling process (2) Cooling time t$_{c3}$ (ms) | Second holding process (2) Current value I$_4$ (kA) | Energization time t$_4$ (ms) | Process including last energization | | |
|---|---|---|---|---|---|---|---|---|---|---|---|---|---|---|---|---|---|---|---|
| 14 | f | 6.5 | 280 | 600 | 7.0 | 20 | 30 | 4.0 | 1500 | 50 | 3 | 100 | First holding | 20 | 2.8 | 100 | Second holding (1) | 2 | Comparative Example |
| 15 | g | 6.5 | 280 | 1000 | 7.8 | 160 | 40 | 4.5 | 600 | 40 | 4.3 | 100 | First holding | - | - | - | - | 1 | Inventive Example |
| 16 | g | 6.7 | 300 | 1400 | 8.0 | 120 | 20 | 4.0 | 1500 | - | - | - | - | - | - | - | - | 0 | Inventive Example |
| 17 | g | 6.5 | 280 | 1600 | 6.8 | 40 | 20 | 6.1 | 1100 | 20 | 4.9 | 400 | First holding | 50 | 6.0 | 50 | Second holding (1) | 2 | Comparative Example |
| 18 | g | 6.5 | 280 | 1000 | 6.8 | 140 | 5 | 3.8 | 300 | - | - | - | - | - | - | - | - | 0 | Inventive Example |
| 19 | g | 7.5 | 280 | 1600 | 7.8 | 160 | 10 | 4.0 | 280 | - | - | - | - | - | - | - | - | 0 | Inventive Example |

(continued)

| Welding number | Sheet set | Primary energization step | | Post-weld tempering heat treatment step | | | | | | | | | | | | | | | | | Remarks |
|---|---|---|---|---|---|---|---|---|---|---|---|---|---|---|---|---|---|---|---|---|---|
| | | | | Secondary energization process | | | | | | | | | | | | | | | | | |
| | | | | Heating process | | | | First holding process | | | Second holding process (1) | | | | Second holding process (2) | | | Number of repetitions (times) | | | |
| | | | | First cooling process | | | Second cooling process | | | Third cooling process (1) | | | | Third cooling process (2) | | | | | | | |
| | | Current value I₁ (kA) | Energization time t₁ (ms) | Cooling time t_c1 (ms) | Current value I₂ (kA) | Energization time t₂ (ms) | Cooling time t_c2 (ms) | Current value I₃ (kA) | Energization time t₃ (ms) | Cooling time t_c3 (ms) | Current value I₄ (kA) | Energization time t₄ (ms) | Process including last energization | Cooling time t_c3 (ms) | Current value I₄ (kA) | Energization time t₄ (ms) | Process including last energization | | | | |
| 20 | h | 6.5 | 280 | 800 | 6.3 | 200 | 20 | 4.4 | 500 | 50 | - | - | First holding | - | - | - | - | 1 | | | Comparative Example |
| 21 | h | 6.5 | 280 | 820 | 8.5 | 120 | 20 | 3.5 | 1600 | 20 | 3 | 400 | First holding | - | - | - | - | 1 | | | Inventive Example |
| 22 | i | 6.5 | 280 | 1600 | 6.0 | 80 | 40 | 4.5 | 400 | - | - | - | - | - | - | - | - | 0 | | | Comparative Example |
| 23 | i | 6.5 | 280 | 1600 | 7.5 | 160 | 10 | 5.0 | 500 | 40 | 4.8 | 200 | First holding | 10 | 4.5 | 200 | Second holding (1) | 2 | | | Inventive Example |
| 24 | j | 6.5 | 280 | 700 | 12.0 | 60 | 40 | 6.5 | 400 | - | - | - | - | - | - | - | - | 0 | | | Comparative Example |

$I_1$ (kA), $t_1$ (ms), $t_{c1}$ (ms), $I_2$ (kA), $t_2$ (ms), $t_{c2}$ (ms), $I_3$ (kA), $t_3$ (ms), $t_{c3}$ (ms), $I_4$ (kA), $t_4$ (ms)

| Weld-ing number | Sheet set | Primary energization step | | First cooling process | Heating process | | Second cooling process | First holding process | | Post-weld tempering heat treatment step — Secondary energization process | | | | | | | | | Number of repetitions (times) | Remarks |
| | | Current value $I_1$ (kA) | Energization time $t_1$ (ms) | Cooling time $t_{c1}$ (ms) | Current value $I_2$ (kA) | Energization time $t_2$ (ms) | Cooling time $t_{c2}$ (ms) | Current value $I_3$ (kA) | Energization time $t_3$ (ms) | Third cooling process (1) — Cooling time $t_{c3}$ (ms) | Second holding process (1) — Current value $I_4$ (kA) | Energization time $t_4$ (ms) | Process including last energization | Third cooling process (2) — Cooling time $t_{c3}$ (ms) | Second holding process (2) — Current value $I_4$ (kA) | Energization time $t_4$ (ms) | Process including last energization | | |
|---|---|---|---|---|---|---|---|---|---|---|---|---|---|---|---|---|---|---|---|
| 25 | k | 6.5 | 280 | 1600 | 7.0 | 10 | 20 | 6.5 | 1000 | - | - | - | - | - | - | - | - | 0 | Comparative Example |

EP 4 371 687 A1

[0162]    - 78 -

[Table 3-2]

| Welding number | Sheet set | Primary energization step | | First cooling process | Heating process | | Second cooling process | First holding process | | Post-weld tempering heat treatment step — Secondary energization process | | | | | | | | Number of repetitions (times) | Remarks |
| | | Current value $I_1$ (kA) | Energization time $t_1$ (ms) | Cooling time $t_{c1}$ (ms) | Current value $I_2$ (kA) | Energization time $t_2$ (ms) | Cooling time $t_{c2}$ (ms) | Current value $I_3$ (kA) | Energization time $t_3$ (ms) | Third cooling process (1) Cooling time $t_{c3}$ (ms) | Second holding process (1) Current value $I_4$ (kA) | Second holding process (1) Energization time $t_4$ (ms) | Second holding process (1) Process including last energization | Third cooling process (2) Cooling time $t_{c3}$ (ms) | Second holding process (2) Current value $I_4$ (kA) | Second holding process (2) Energization time $t_4$ (ms) | Second holding process (2) Process including last energization | | |
|---|---|---|---|---|---|---|---|---|---|---|---|---|---|---|---|---|---|---|---|
| 26 | k | 6.5 | 280 | 2000 | 10.0 | 160 | 80 | 4.0 | 1000 | 20 | 3.8 | 600 | First holding | - | - | - | - | 1 | Inventive Example |
| 27 | k | 6.5 | 280 | 1000 | 6.7 | 120 | 20 | 4.0 | 500 | 20 | 3.5 | 20 | First holding | - | - | - | - | 1 | Inventive Example |
| 28 | l | 6.3 | 300 | 1000 | 5.5 | 100 | 60 | 2.0 | 1600 | - | - | - | - | - | - | - | - | 0 | Comparative Example |
| 29 | l | 6.5 | 280 | 1800 | 7.0 | 140 | 20 | 4.0 | 1800 | - | - | - | - | - | - | - | - | 0 | Inventive Example |
| 30 | m | 6.5 | 280 | 1600 | 6.8 | 200 | 180 | 4.5 | 1800 | - | - | - | - | - | - | - | - | 0 | Inventive Example |
| 31 | m | 6.5 | 280 | 1600 | 12.0 | 140 | 80 | 4.5 | 1200 | - | - | - | - | - | - | - | - | 0 | Comparative Example |

| Welding number | Sheet set | Primary energization step | | First cooling process | Heating process | | Second cooling process | First holding process | | Post-weld tempering heat treatment step — Secondary energization process | | | | | | | | Number of repetitions (times) | Remarks |
| | | Current value $I_1$ (kA) | Energization time $t_1$ (ms) | Cooling time $t_{c1}$ (ms) | Current value $I_2$ (kA) | Energization time $t_2$ (ms) | Cooling time $t_{c2}$ (ms) | Current value $I_3$ (kA) | Energization time $t_3$ (ms) | Third cooling process (1) Cooling time $t_{c3}$ (ms) | Second holding process (1) Current value $I_4$ (kA) | Energization time $t_4$ (ms) | Process including last energization | Third cooling process (2) Cooling time $t_{c3}$ (ms) | Second holding process (2) Current value $I_4$ (kA) | Energization time $t_4$ (ms) | Process including last energization | | |
|---|---|---|---|---|---|---|---|---|---|---|---|---|---|---|---|---|---|---|---|
| 32 | n | 6.5 | 280 | 1600 | 7.5 | 180 | 60 | 4.0 | 1200 | 40 | 3.5 | 100 | First holding | 10 | 3.0 | 50 | Second holding (1) | 2 | Inventive Example |
| 33 | n | 6.7 | 250 | 1800 | 7.0 | 120 | 20 | 4.2 | 1300 | - | - | - | - | - | - | - | - | 0 | Inventive Example |
| 34 | n | 6.5 | 280 | 900 | 7.5 | 160 | 400 | 7.0 | 900 | - | - | - | - | - | - | - | - | 0 | Comparative Example |
| 35 | o | 6.5 | 280 | 2000 | 8.5 | 150 | 40 | 4.5 | 1800 | 20 | 4.3 | 60 | First holding | - | - | - | - | 1 | Inventive Example |
| 36 | o | 6.5 | 280 | 600 | 7.8 | 220 | 20 | 4.8 | 1600 | - | - | - | - | - | - | - | - | 0 | Comparative Example |
| 37 | p | 6.5 | 280 | 1000 | 8.1 | 220 | 20 | 7.0 | 1000 | 20 | 4.4 | 200 | First holding | - | - | - | - | 1 | Inventive Example |

(continued)

| Welding number | Sheet set | Primary energization step | | First cooling process | Heating process | | Second cooling process | First holding process | | Post-weld tempering heat treatment step — Secondary energization process | | | | | | | Number of repetitions (times) | Remarks |
|---|---|---|---|---|---|---|---|---|---|---|---|---|---|---|---|---|---|---|
| | | Current value I$_1$ (kA) | Energization time t$_1$ (ms) | Cooling time t$_{c1}$ (ms) | Current value I$_2$ (kA) | Energization time t$_2$ (ms) | Cooling time t$_{c2}$ (ms) | Current value I$_3$ (kA) | Energization time t$_3$ (ms) | Third cooling process (1) — Cooling time t$_{c3}$ (ms) | Second holding process (1) — Current value I$_4$ (kA) | Energization time t$_4$ (ms) | Process including last energization | Third cooling process (2) — Cooling time t$_{c3}$ (ms) | Second holding process (2) — Current value I$_4$ (kA) | Energization time t$_4$ (ms) | Process including last energization | | |
| 39 | p | 6.5 | 280 | 1000 | 6.0 | 120 | 30 | 4.0 | 500 | - | - | - | - | - | - | - | - | 0 | Comparative Example |
| 40 | q | 6.5 | 280 | 1000 | 5.8 | 160 | 100 | 3.0 | 1000 | - | - | - | - | - | - | - | - | 0 | Comparative Example |
| 41 | q | 6.5 | 280 | 2000 | 8.0 | 120 | 20 | 5.0 | 1500 | - | - | - | - | - | - | - | - | 0 | Inventive Example |
| 42 | a | 4.5 | 380 | 1000 | 7.0 | 160 | 80 | 4.0 | 1000 | 290 | 3.5 | 100 | First holding | - | - | - | - | 1 | Inventive Example |
| 43 | a | 5.5 | 340 | 900 | 8.0 | 200 | 20 | 6.0 | 1200 | 250 | 4.8 | 200 | First holding | - | - | - | - | 1 | Inventive Example |
| 44 | b | 4.1 | 400 | 1000 | 6.0 | 140 | 80 | 5.0 | 1500 | 290 | 4.5 | 20 | First holding | - | - | - | - | 1 | Inventive Example |
| 45 | k | 7.8 | 180 | 1200 | 8.0 | 120 | 60 | 4.0 | 1600 | 200 | 3.5 | 400 | First holding | - | - | - | - | 1 | Inventive Example |

(continued)

| Welding number | Sheet set | Primary energization step | | Post-weld tempering heat treatment step | | | | | | | | | | | | | | Number of repetitions (times) | Remarks |
|---|---|---|---|---|---|---|---|---|---|---|---|---|---|---|---|---|---|---|---|
| | | | | First cooling process | Heating process | | Second cooling process | First holding process | | Secondary energization process | | | | | | | | | |
| | | | | | | | | | | Third cooling process (1) | Second holding process (1) | | | Third cooling process (2) | Second holding process (2) | | | | |
| | | Current value $I_1$ (kA) | Energization time $t_1$ (ms) | Cooling time $t_{c1}$ (ms) | Current value $I_2$ (kA) | Energization time $t_2$ (ms) | Cooling time $t_{c2}$ (ms) | Current value $I_3$ (kA) | Energization time $t_3$ (ms) | Cooling time $t_{c3}$ (ms) | Current value $I_4$ (kA) | Energization time $t_4$ (ms) | Process including last energization | Cooling time $t_{c3}$ (ms) | Current value $I_4$ (kA) | Energization time $t_4$ (ms) | Process including last energization | | |
| 46 | k | 8.1 | 120 | 2000 | 8.5 | 220 | 280 | 4.0 | 500 | 180 | 3.8 | 120 | First holding | - | - | - | - | 1 | Inventive Example |

[0163] - 79 -

[Table 4-1]

| Welding number | Sheet set | Length D (mm) | Hardness of central portion of nugget Hvm | Nugget edge region *1 | | | Hardness of softest portion of nugget edge region / hardness of central portion of nugget [Hv / Hvm] | HAZ softened region *1 | | | | Hardness of HAZ softened region / hardness of central portion of nugget [Hvh / Hvm] |
| | | | | Area fraction of F (%) | Area fraction of M (%) | Hardness of softest portion Hv | | Average number density of carbide particles (particles / 5 μm²) | Hardness Hvh | Type of microstructure | Area fraction of TM (%) | |
|---|---|---|---|---|---|---|---|---|---|---|---|---|
| 1 | a | 5.5 | 509 | 0 | 100 | 501 | 0.98 | 0 | 507 | M | 0 | 1.00 |
| 2 | a | 5.5 | 492 | 5 | 95 | 400 | 0.81 | 30 | 421 | TM, M | 60 | 0.86 |
| 3 | a | 5.5 | 488 | 10 | 90 | 411 | 0.84 | 24 | 419 | TM, M | 55 | 0.86 |
| 4 | b | 5.5 | 444 | 0 | 100 | 430 | 0.97 | 0 | 445 | M | 0 | 1.00 |
| 5 | b | 5.5 | 421 | 15 | 85 | 296 | 0.70 | 92 | 311 | TM | 100 | 0.74 |
| 6 | c | 5.5 | 472 | 27 | 73 | 392 | 0.83 | 33 | 400 | TM, M | 52 | 0.85 |
| 7 | c | 5.5 | 485 | 17 | 83 | 400 | 0.82 | 39 | 412 | TM, M | 70 | 0.85 |
| 8 | d | 5.5 | 462 | 22 | 78 | 350 | 0.76 | 45 | 357 | TM, M | 82 | 0.77 |
| 9 | d | 5.7 | 508 | 0 | 100 | 500 | 0.98 | 0 | 514 | M | 0 | 1.01 |
| 10 | d | 3.5 | 484 | 25 | 77 | 350 | 0.72 | 50 | 354 | TM, M | 80 | 0.73 |
| 11 | e | 5.7 | 475 | 0 | 100 | 451 | 0.95 | 1 | 481 | M | 0 | 1.01 |
| 12 | e | 5.7 | 483 | 35 | 65 | 311 | 0.64 | 152 | 321 | TM | 100 | 0.66 |
| 13 | f | 5.5 | 707 | 12 | 88 | 598 | 0.85 | 22 | 617 | TM, M | 68 | 0.87 |
| 14 | f | 5.5 | 793 | 0 | 100 | 786 | 0.99 | 0 | 787 | M | 0 | 0.99 |
| 15 | 9 | 5.5 | 555 | 15 | 85 | 401 | 0.72 | 85 | 421 | TM, M | 95 | 0.76 |
| 16 | 9 | 5.6 | 600 | 20 | 80 | 412 | 0.69 | 91 | 416 | TM | 100 | 0.69 |
| 17 | 9 | 5.5 | 605 | 0 | 100 | 610 | 1.01 | 138 | 601 | M | 0 | 0.99 |
| 18 | 9 | 5.5 | 592 | 11 | 89 | 431 | 0.73 | 110 | 442 | TM | 100 | 0.75 |
| 19 | 9 | 6 | 585 | 15 | 85 | 422 | 0.72 | 100 | 439 | TM | 100 | 0.75 |

(continued)

| Welding number | Sheet set | Length D (mm) | Hardness of central portion of nugget Hvm | Nugget edge region *1 | | | Hardness of softest portion of nugget edge region / hardness of central portion of nugget [Hv / Hvm] | HAZ softened region *1 | | | | Hardness of HAZ softened region / hardness of central portion of nugget [Hvh / Hvm] |
|---|---|---|---|---|---|---|---|---|---|---|---|---|
| | | | | Area fraction of F (%) | Area fraction of M (%) | Hardness of softest portion Hv | | Average number density of carbide particles (particles / 5 μm²) | Hardness Hvh | Type of microstructure | Area fraction of TM (%) | |
| 20 | h | 5.5 | 810 | 0 | 100 | 805 | 0.99 | 0 | 808 | M | 0 | 1.00 |
| 21 | h | 5.5 | 800 | 2 | 98 | 632 | 0.79 | 75 | 635 | TM, M | 89 | 0.79 |
| 22 | i | 5.5 | 711 | 0 | 100 | 700 | 0.98 | 0 | 700 | M | 0 | 0.98 |
| 23 | i | 5.5 | 688 | 14 | 86 | 480 | 0.70 | 82 | 498 | TM, M | 94 | 0.72 |
| 24 | j | 5.5 | 844 | 0 | 100 | 835 | 0.99 | 0 | 838 | M | 0 | 0.99 |
| 25 | k | 5.5 | 704 | 0 | 100 | 710 | 1.01 | 0 | 696 | M | 0 | 0.99 |

*1. F: Ferrite, M: Martensite, TM: Tempered martensite

37

[0164]   - 80 -

[Table 4-2]

| Welding number | Sheet set | Length D (mm) | Hardness of central portion of nugget Hvm | Nugget edge region *1 | | | | HAZ softened region *1 | | | | Hardness of HAZ softened region / hardness of central portion of nugget [Hvh / Hvm] |
|---|---|---|---|---|---|---|---|---|---|---|---|---|
| | | | | Area fraction of F (%) | Area fraction of M (%) | Hardness of softest portion Hv | Hardness of softest portion of nugget edge region / hardness of central portion of nugget [Hv / Hvm] | Average number density of carbide particles (particles / 5 μm²) | Hardness Hvh | Type of microstructure | Area fraction of TM (%) | |
| 26 | k | 5.5 | 645 | 11 | 89 | 529 | 0.82 | 17 | 534 | TM, M | 47 | 0.83 |
| 27 | k | 5.5 | 655 | 19 | 81 | 441 | 0.67 | 98 | 453 | TM | 100 | 0.69 |
| 28 | l | 5.5 | 592 | 0 | 100 | 585 | 0.99 | 0 | 600 | M | 0 | 1.01 |
| 29 | l | 5.5 | 581 | 29 | 71 | 374 | 0.64 | 90 | 391 | TM | 100 | 0.67 |
| 30 | m | 5.5 | 503 | 26 | 74 | 367 | 0.73 | 75 | 375 | TM, M | 78 | 0.75 |
| 31 | m | 5.5 | 501 | 0 | 100 | 512 | 1.02 | 0 | 491 | M | 0 | 0.98 |
| 32 | n | 5.5 | 511 | 15 | 85 | 400 | 0.78 | 72 | 409 | M | 0 | 0.80 |
| 33 | n | 5.8 | 479 | 7 | 93 | 421 | 0.88 | 58 | 420 | TM, M | 67 | 0.88 |
| 34 | n | 5.5 | 499 | 0 | 100 | 478 | 0.96 | 0 | 502 | M | 0 | 1.01 |
| 35 | o | 5.5 | 432 | 8 | 92 | 324 | 0.75 | 67 | 337 | TM, M | 68 | 0.78 |
| 36 | o | 5.5 | 475 | 0 | 100 | 440 | 0.93 | 4 | 480 | M | 0 | 1.01 |
| 37 | p | 5.5 | 630 | 16 | 84 | 511 | 0.81 | 55 | 523 | TM, M | 52 | 0.83 |
| 39 | p | 5.5 | 698 | 0 | 100 | 665 | 0.95 | 0 | 688 | M | 0 | 0.99 |
| 40 | q | 5.5 | 612 | 0 | 100 | 587 | 0.96 | 0 | 601 | M | 0 | 0.98 |
| 41 | q | 5.5 | 608 | 21 | 79 | 500 | 0.82 | 61 | 517 | TM, M | 75 | 0.85 |
| 42 | a | 4.1 | 500 | 80 | 20 | 442 | 0.88 | 10 | 354 | TM, M | 75 | 0.71 |
| 43 | a | 4.9 | 502 | 50 | 50 | 410 | 0.82 | 21 | 405 | TM, M | 59 | 0.81 |
| 44 | b | 4.2 | 433 | 15 | 85 | 381 | 0.88 | 10 | 334 | TM, M | 64 | 0.77 |
| 45 | k | 6.2 | 665 | 40 | 60 | 315 | 0.47 | 41 | 300 | TM, M | 88 | 0.45 |

(continued)

| Welding number | Sheet set | Length D (mm) | Hardness of central portion of nugget Hvm | Nugget edge region *1 | | | Hardness of softest portion of nugget edge region / hardness of central portion of nugget [Hv / Hvm] | HAZ softened region *1 | | | | Hardness of HAZ softened region / hardness of central portion of nugget [Hvh / Hvm] |
|---|---|---|---|---|---|---|---|---|---|---|---|---|
| | | | | Area fraction of F (%) | Area fraction of M (%) | Hardness of softest portion Hv | | Average number density of carbide particles (particles / 5 $\mu m^2$) | Hardness Hvh | Type of microstructure | Area fraction of TM (%) | |
| 46 | k | 6.1 | 665 | 20 | 80 | 285 | 0.43 | 45 | 299 | TM, M | 78 | 0.45 |
| *1. F: Ferrite, M: Martensite, TM: Tempered martensite | | | | | | | | | | | | |

[Table 5-1]

| Welding number | CTS (kN) | Judgment on CTS | Delayed fracture resistance | Evaluation of joint *1 | Remarks |
|---|---|---|---|---|---|
| | | Evaluation results | | | |
| 1 | 2.1 | × | × | × | Comparative Example |
| 2 | 6.9 | ○ | ○ | ○ | Inventive Example |
| 3 | 5.9 | ○ | ○ | ○ | Inventive Example |
| 4 | 2.3 | × | × | × | Comparative Example |
| 5 | 6.5 | ○ | ○ | ○ | Inventive Example |
| 6 | 7.6 | ○ | ○ | ○ | Inventive Example |
| 7 | 6.5 | ○ | ○ | ○ | Inventive Example |
| 8 | 6.5 | ○ | ○ | ○ | Inventive Example |
| 9 | 2.5 | × | × | × | Comparative Example |
| 10 | 4.5 | ○ | ○ | ○ | Inventive Example |
| 11 | 1.0 | × | × | × | Comparative Example |
| 12 | 8.1 | ○ | ○ | ○ | Inventive Example |
| 13 | 4.2 | ○ | ○ | ○ | Inventive Example |
| 14 | 1.0 | × | × | × | Comparative Example |
| 15 | 4.4 | ○ | ○ | ○ | Inventive Example |
| 16 | 7.5 | ○ | ○ | ○ | Inventive Example |
| 17 | 1.2 | × | × | × | Comparative Example |
| 18 | 4.6 | ○ | ○ | ○ | Inventive Example |
| 19 | 5.9 | ○ | ○ | ○ | Inventive Example |
| 20 | 0.7 | × | × | × | Comparative Example |
| 21 | 4.1 | ○ | ○ | ○ | Inventive Example |
| 22 | 0.9 | × | × | × | Comparative Example |
| 23 | 7.5 | ○ | ○ | ○ | Inventive Example |
| 24 | 0.9 | × | × | × | Comparative Example |
| 25 | 1.3 | × | × | × | Comparative Example |

*1. Evaluation of joint: The symbol "o" means that the CTS and the delayed fracture resistance are satisfactory, and the symbol "×" means that the CTS or the delayed fracture resistance is not satisfactory.

[Table 5-2]

| Welding number | CTS (kN) | Evaluation results | | | Remarks |
|---|---|---|---|---|---|
| | | Judgment on CTS | Delayed fracture resistance | Evaluation of joint *1 | |
| 26 | 4.6 | ○ | ○ | ○ | Inventive Example |
| 27 | 6.8 | ○ | ○ | ○ | Inventive Example |
| 28 | 1.6 | × | × | × | Comparative Example |
| 29 | 5.7 | ○ | ○ | ○ | Inventive Example |
| 30 | 6.2 | ○ | ○ | ○ | Inventive Example |
| 31 | 2.3 | × | × | × | Comparative Example |
| 32 | 7.2 | ○ | ○ | ○ | Inventive Example |
| 33 | 5.6 | ○ | ○ | ○ | Inventive Example |
| 34 | 1.9 | × | × | × | Comparative Example |
| 35 | 7.4 | ○ | ○ | ○ | Inventive Example |
| 36 | 2.4 | × | × | × | Comparative Example |
| 37 | 5.7 | ○ | ○ | ○ | Inventive Example |
| 39 | 1.1 | × | × | × | Comparative Example |
| 40 | 1.3 | × | × | × | Comparative Example |
| 41 | 6.8 | ○ | ○ | ○ | Inventive Example |
| 42 | 5.3 | ○ | ○ | ○ | Inventive Example |
| 43 | 5.6 | ○ | ○ | ○ | Inventive Example |
| 44 | 4.9 | ○ | ○ | ○ | Inventive Example |
| 45 | 6.5 | ○ | ○ | ○ | Inventive Example |
| 46 | 7.8 | ○ | ○ | ○ | Inventive Example |

*1. Evaluation of joint: The symbol "o" means that the CTS and the delayed fracture resistance are satisfactory, and the symbol "×" means that the CTS or the delayed fracture resistance is not satisfactory.

As can be seen in Tables 3-1 to 5-2, in each of the Inventive Examples, the resistance spot welded joint formed by resistance-spot-welding a plurality of steel sheets including at least one high strength coated steel sheet was a good welded joint having excellent tensile shear strength and excellent delayed fracture resistance. However, in the Comparative Examples, a good welded joint was not obtained. Reference Signs List

1, 2, 10 steel sheet
3 nugget
4, 5 welding electrode
6 heat-affected zone
7 steel sheet faying surface
8 first edge
9 second edge

11 resistance spot welded joint
31 nugget edge region
61 HAZ softened region

**Claims**

1. A resistance spot welded joint having a resistance spot weld formed by resistance-spot-welding two or more steel sheets including at least one high strength steel sheet,

   wherein the high strength steel sheet has a chemical composition comprising, in mass %,

   C: 0.05 to 0.6%,
   Si: 0.1 to 2.0%,
   Mn: 1.5 to 4.0%,
   P: 0.10% or less,
   S: 0.005% or less, and
   N: 0.001 to 0.010%,

   with the balance being Fe and incidental impurities,
   wherein two points at which a boundary of a nugget intersects a faying surface between two of the two or more steel sheets are defined as a first edge and a second edge, wherein a length of a line segment X connecting the first edge and the second edge is denoted as D (mm), wherein positions on the line segment X that are spaced toward a center of the nugget from the first edge and the second edge are denoted as a point a and a point b, respectively,
   wherein a region inside the nugget in which a distance L (mm) from the first edge to the point a and a distance L (mm) from the second edge to the point b satisfy a relation with the length D (mm) of the line segment X that is represented by formula (1) is defined as a nugget edge region,
   wherein a microstructure of the nugget edge region on at least the faying surface includes ferrite at an area fraction of 1% or more with respect to a total area of the nugget edge region,
   wherein a hardness Hv of a softest portion of the nugget edge region and a hardness Hvm of a central portion of the nugget satisfy a relation of formula (2),
   wherein an intersection of a straight line Z parallel to the faying surface and the boundary of the nugget is denoted as a point q, wherein a position on the straight line Z within a heat-affected zone is denoted as a point r,
   wherein a region inside the heat-affected zone in which a distance M (mm) between the straight line Z and the faying surface in a thickness direction satisfies a relation of formula (3) and in which a distance T (mm) from the point q to the point r satisfies a relation of formula (4) is defined as a HAZ softened region, and
   wherein a hardness Hvh of the HAZ softened region on a high strength steel sheet side and the hardness Hvm of the central portion of the nugget satisfy a relation of formula (5),

   $$0 < L \leq 0.15 \times D, \qquad (1)$$

   $$0.90 \times Hvm > Hv, \qquad (2)$$

   $$M = 0.10 \times D, \qquad (3)$$

   $$0 < T \leq 0.10 \times D, \text{ and} \qquad (4)$$

   $$0.90 \times Hvm > Hvh, \qquad (5)$$

   provided that, when a gap is present between the two of the two or more steel sheets at the faying surface, the first edge and the second edge are two points at which the boundary of the nugget intersects a straight line Y that is located midway in the gap and that is parallel to the faying surface.

**2.** The resistance spot welded joint according to claim 1, wherein an average number density of carbide particles having a diameter of 100 nm or more in the HAZ softened region is 10 or more per 5 $\mu m^2$ in a cross section of the steel sheets.

**3.** The resistance spot welded joint according to claim 1 or 2, wherein a microstructure of the HAZ softened region includes tempered martensite at an area fraction of 50% or more with respect to a total area of the HAZ softened region.

**4.** The resistance spot welded joint according to any one of claims 1 to 3, wherein the chemical composition of the high strength steel sheet further comprises, in mass %, one or two or more selected from

Al: 2.0% or less,
B: 0.005% or less,
Ca: 0.005% or less,
Cr: 1.0% or less,
Cu: 1.0% or less,
Ni: 1.0% or less,
Mo: 1.0% or less,
Ti: 0.20% or less,
V: 0.50% or less,
Nb: 0.20% or less, and
O: 0.03% or less.

**5.** A resistance spot welding method for the resistance spot welded joint according to any one of claims 1 to 4, the resistance spot weld being formed by holding, between a pair of welding electrodes, a sheet set including the two or more steel sheets overlapping each other and including the at least one high strength steel sheet and then energizing the sheet set under application of pressure,

wherein the energizing includes a primary energization step and a post-weld tempering heat treatment step,
wherein, in the primary energization step, the sheet set is energized at a current value $I_1$ (kA) to form the nugget,
wherein the post-weld tempering heat treatment step includes the following processes performed in the following order:

a first cooling process in which a non-energization state is maintained for a cooling time $t_{c1}$ (ms) shown in formula (6);
a heating process in which the resistance spot weld is energized at a current value $I_2$ (kA) shown in formula (7) for an energization time $t_2$ (ms) shown in formula (8); and
a second cooling process in which a non-energization state is maintained for a cooling time $t_{c2}$ (ms) shown in formula (9),

$$800 \leq t_{c1}, \quad (6)$$

$$I_1 < I_2 \leq 1.8 \times I_1, \quad (7)$$

$$100 < t_2 \leq 300, \quad (8)$$

$$0 < t_{c2} < 300. \quad (9)$$

**6.** The resistance spot welding method for the resistance spot welded joint according to claim 5, wherein, after the second cooling process, a first holding process is performed in which the resistance spot weld is energized at a current value $I_3$ (kA) shown in formula (10) for an energization time $t_3$ (ms) shown in formula (11),

$$0 < I_3 < I_2, \quad (10)$$

$$0 < t_3 < 2000. \qquad (11)$$

7. The resistance spot welding method for the resistance spot welded joint according to claim 6, wherein the post-weld tempering heat treatment step further includes, after the first holding process, a secondary energization process, and wherein the secondary energization process includes the following processes performed in the following order:

a third cooling process in which a non-energization state is maintained for a cooling time $t_{c3}$ (ms) shown in formula (12); and
a second holding process in which the resistance spot weld is energized for an energization time $t_4$ of longer than 0 ms and 2000 ms or shorter at a current value $I_4$ equal to or more than 0.1 times and equal to or less than 1.3 times the current value in a process including last energization,

$$t_{c3} < 300. \qquad (12)$$

8. The resistance spot welding method for the resistance spot welded joint according to claim 7, wherein the third cooling process and the second holding process in the secondary energization process are repeatedly performed.

## FIG. 1

## FIG. 2

## FIG. 3

## FIG. 4

## FIG. 5

## FIG. 6

## FIG. 7

## INTERNATIONAL SEARCH REPORT

| International application No. |
| --- |
| **PCT/JP2022/036459** |

**A. CLASSIFICATION OF SUBJECT MATTER**

**B23K 11/16**(2006.01)i; **B23K 11/11**(2006.01)i; **B23K 11/24**(2006.01)i; **C21D 9/50**(2006.01)i; **C22C 38/00**(2006.01)i; **C22C 38/58**(2006.01)i
FI: B23K11/16; B23K11/11 540; B23K11/24 315; C21D9/50 101B; C22C38/00 301B; C22C38/58

According to International Patent Classification (IPC) or to both national classification and IPC

**B. FIELDS SEARCHED**

Minimum documentation searched (classification system followed by classification symbols)

B23K11/16; B23K11/11; B23K11/24; C21D9/50; C22C38/00; C22C38/58

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2017-13078 A (NETUREN CO., LTD.) 19 January 2017 (2017-01-19) claim 4, paragraphs [0011]-[0042], fig. 1-8 | 1-4 |
| A | | 5-8 |
| Y | WO 2021/200577 A1 (JFE STEEL CORPORATION) 07 October 2021 (2021-10-07) claims 1-4, paragraphs [0003], [0018] | 1-4 |
| Y | JP 2014-180698 A (NIPPON STEEL & SUMITOMO METAL CORP) 29 September 2014 (2014-09-29) claims 1-6, paragraph [0028] | 1-4 |
| Y | WO 2011/025015 A1 (NIPPON STEEL CORPORATION) 03 March 2011 (2011-03-03) claims 1-5, paragraphs [0093]-[0105] | 2-4 |
| Y | WO 2020/241500 A1 (NIPPON STEEL CORPORATION) 03 December 2020 (2020-12-03) claim 1 | 3-4 |

☐ Further documents are listed in the continuation of Box C.　☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **28 November 2022** | **13 December 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

<div align="center">

**INTERNATIONAL SEARCH REPORT**
**Information on patent family members**

</div>

| International application No. |
| --- |
| **PCT/JP2022/036459** |

| Patent document<br>cited in search report | | | Publication date<br>(day/month/year) | Patent family member(s) | | | Publication date<br>(day/month/year) |
| --- | --- | --- | --- | --- | --- | --- | --- |
| JP | 2017-13078 | A | 19 January 2017 | US | 2018/0104761 | A1 | |
| | | | | claim 4, paragraphs [0020]-<br>[0059], fig. 1-8 | | | |
| | | | | WO | 2016/208204 | A1 | |
| WO | 2021/200577 | A1 | 07 October 2021 | CN | 115362275 | A | |
| | | | | claims 1-4, paragraphs [0003],<br>[0094] | | | |
| | | | | KR | 10-2022-0144404 | A | |
| JP | 2014-180698 | A | 29 September 2014 | (Family: none) | | | |
| WO | 2011/025015 | A1 | 03 March 2011 | US | 2012/0141829 | A1 | |
| | | | | claims 1-5, paragraphs [0242]-<br>[0256] | | | |
| | | | | EP | 2474381 | A1 | |
| | | | | KR | 10-2012-0038512 | A | |
| | | | | CN | 102625740 | A | |
| WO | 2020/241500 | A1 | 03 December 2020 | CN | 114007796 | A | |
| | | | | claim 1 | | | |
| | | | | KR | 10-2021-0150563 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5182855 B
- JP 5713147 B
- JP 5895430 B
- JP 6107939 B
- JP 6315161 B